# EUROPÄISCHE PATENTSCHRIFT

(11) **EP 4 209 331 B1**
(45) Veröffentlichungstag und Bekanntmachung des Hinweises auf die Patenterteilung: **12.03.2025**
(21) Anmeldenummer: 22195415.9
(22) Anmeldetag: 13.09.2022
(51) Int. Cl.: B29C 55/12, B29C 48/08, B29C 51/00, C08J 5/18

(54) **BIAXIAL-ORIENTIERTE POLYETHYLENFOLIEN FÜR DAS THERMOFORMEN, VERFAHREN ZU IHRER HERSTELLUNG, IHRE VERWENDUNG, EIN VERFAHREN ZUM THERMOFORMEN UND DESSEN PRODUKTE**
BIAXIALLY ORIENTED POLYETHYLENE SHEETS FOR THERMOFORMING, PROCESS FOR THEIR MANUFACTURE, THEIR USE, A THERMOFORMING PROCESS AND PRODUCTS THEREOF
FILMS DE POLYÉTHYLÈNE BIAXIALEMENT ORIENTÉS POUR LE THERMOFORMAGE, LEUR PROCÉDÉ DE FABRICATION, LEUR UTILISATION, UN PROCÉDÉ DE THERMOFORMAGE ET SES PRODUITS

(30) Priorität: 20.09.2021 DE 102021124259
(43) Veröffentlichungstag der Anmeldung: 12.07.2023
(73) Patentinhaber: Brückner Maschinenbau GmbH, 83313 Siegsdorf (DE)
(72) Erfinder: Pecher, Michael, 83278 Traunstein (DE); Douzhyk, Andrei, 83313 Siegsdorf (DE); Müller, Ilja, 83137 Schonstett (DE); BARTH, Jan, 83313 Siegsdorf (DE)
(74) Vertreter: Flach Bauer & Partner Patentanwälte mbB

(56) Entgegenhaltungen:
- US-A1- 2014 228 517
- US-B2- 10 752 740
- US-B2- 7 985 804

## Beschreibung

### Einleitung

Die vorliegende Erfindung betrifft eine biaxial orientierte Folie für das Thermoformen, dadurch gekennzeichnet, dass die Folie wenigstens 85 Gewichtsprozente Polyethylen und wenigstens 95 Gewichtsprozente Polyolefine, bezogen auf die gesamte Masse der Folie enthält. Sie betrifft ferner ein Verfahren zur Herstellung solcher Folien und deren Verwendung. Die Erfindung betrifft außerdem ein Verfahren zur Herstellung von Formkörpern aus solchen Folien und die Formkörper selbst.

### Stand der Technik

Folien aus biaxial orientierten Kunststofffolien und ihre Eigenschaften sind dem Fachmann bekannt. Bei der Herstellung solcher Folien wird aufgeschmolzenes Kunststoffgranulat extrudiert und daraus eine Gießfolie hergestellt. Die Gießfolie wird anschließend durch mono- oder biaxiale Verstreckung orientiert. Die Verstreckung kann in einem sequentiellen oder in einem simultanen Prozess erfolgen. Als biaxial orientierte Kunststofffolien werden zum Beispiel Folien aus biaxial orientiertem Polypropylen (BOPP), Folien aus biaxial orientiertem Polyethylenterephthalat (BOPET), Folien aus biaxial orientiertem Polyamid (BOPA) und Folien aus biaxial orientiertem Polystyrol (BOPS) industriell verwendet. Durch die biaxiale Orientierung wird eine Veränderung der Morphologie der Molekularstruktur erreicht, welche den Folien eine Vielzahl von unterschiedlichen vorteilhaften Eigenschaften bei gleichzeitiger Verringerung der Gesamtdicke bringt:
- Veränderung der physikalischen Eigenschaften (bspw. verbesserte Steifigkeit und Reißfestigkeit)
- Optische Merkmale (bspw. erhöhte Transparenz und erhöhter Glanz)
- Barriereeigenschaften (bspw. verbesserte Barriereeigenschaften für Sauerstoff (oder Luft) und Wasser)
- Gewichtseinsparung in Verpackung / Materialeffiziente Verpackung
- Energieeffizientere Produktion

Das Verstrecken in den beiden Reckrichtungen kann zeitlich getrennt voneinander (sequentiell) oder aber in einem Verfahrensschritt (simultan) erfolgen. Beim sequenziellen Verstrecken wird das Verstrecken in Längsrichtung (Maschinenrichtung; machine direction; "MD") und in Querrichtung (Quer zur Maschinenrichtung; transversal direction "TD") zeitlich getrennt voneinander durchgeführt. In der Regel wird zuerst eine Verstreckung in Längsrichtung und anschließend eine Verstreckung in Querrichtung durchgeführt.

Als Verfahren zur Herstellung biaxial orientierter Folien sind Blasfolienverfahren (bspw. einem Double Bubble Verfahren) und Flachfolienverfahren (BO/LISIM^{®}/MESIM^{®}) bekannt. Die unterschiedlichen Prozesse wären dementsprechend das simultane Blasfolienverfahren (Double Bubble) oder der Flachfolienverfahren, welche in simultane (LISIM^{®}, MESIM^{®} etc.) und sequentielle Prozesse unterteilt werden kann.

Thermoformen ist ein primärer Polymer Konvertierungs-Prozess. Hierbei wird eine Folie bis in den gummielastischen Bereich erhitzt und bspw. über mechanische oder pneumatische Umformung (bspw. über Vakuum ziehen) verformt, wobei die Oberfläche der Folie zu einem dreidimensionalen Objekt verformt wird. Ein großer Vorteil dieser Technik sind Energie- und Herstellungseffizienz, günstige Thermoform-Werkzeuge und Maschinen und die Möglichkeit Multilagen-Folien, Kavitierungen und vorgedruckte Folien zu formen.

In diesem Prozess werden normalerweise amorphe und teilkristalline Polymere wie Polyvinylchlorid (PVC), gegossenes Polypropylen (Cast-PP oder CPP), gegossenes Polyethylenterephthalat (Cast-PET), Polystyrol (PS), biaxial orientiertes Polystyrol (BOPS), Ethylen-Vinylalkohol-Copolymer (EVOH), Acrylnitril-Butadien-Styrol-Copolymer (ABS), etc. umgeformt. Auch mehrschichtige Folien welche Schichten aus Polyethylen (PE) enthalten finden ihre Anwendung, zum Beispiel coextrudierte Multilagen-Blasfolien mit einer PS-EVOH-PE- oder PP-EVOH-PE-Dreilagenstruktur. Dabei können die Polyethylenschichten je nach Kombination dazu dienen, um beispielsweise bessere Heißsiegeleigenschaften oder bessere Barriereeigenschaften preisgünstig in ein Produkt einzubringen.

Das Problem der thermoplastischen Kunststoffe wie bspw. Polyethylen und Polypropylen ist, dass durch die Orientierung ein Absinken der Bruchdehnung verursacht. Dies ist im Thermoformprozess problematisch. Aus diesem Grund sind wenige biaxial orientierte Folien für den Thermoformprozess geeignet. Hierzu gehört BOPS und bedingt auch biaxial orientiertes Polypropylen (BOPP). Ein Vorteil von orientierten Polymeren bei der Thermoformbarkeit ist, dass durch die Verstreckung der Film beim Aufheizen nicht zum Foliendurchhang (Sagging) neigt. Foliendurchhang führt zu unregelmäßiger Verformung des durch Thermoformen gebildeten Produkts. Grund für einen Foliendurchhang ist die lineare Wärmeausdehnung des Rohstoffs, welches sich bspw. als problematisch bei Filmtypen wie Polypropylen-Gießfolie erweist. Bei biaxial orientiertem Polystyrol ist dieser Effekt nicht beobachtbar.

Polyethylen hat rohstoffabhängig als Gießfilm sehr geringe E-Modul-Werte und einen sehr hohen Schrumpf (und damit geringe Formstabilität) im Vergleich zu Gießfilmen aus anderen Polymeren. Deshalb ist die Anwendung Polyethylen-Gießfilme in Thermoform-Prozessen auf Spezialgebiete beschränkt. Hierzu gehört zum Beispiel das Thermoformen mit Talkum zur Verfestigung bei großdimensionierten Kotflügeln. Somit hat Polyethylen im Thermoformmarkt nur einen sehr geringen Marktanteil. Konträr zum Marktanteil im gesamten Verpackungsmarkt, welcher mehr als 50 % beträgt.

Ein Problem beim Thermoformen von Polyethylen ist die unregelmäßige Verdünnung der Folie bei komplexeren Formen in Randbereichen bei der Formung auf Grund des ungleichmäßigen Schrumpfverhaltens und der geringeren Dimensionsstabilität. Wenn ein Film mit zu geringer Dicke thermogeformt wird, verbleibt an den Kanten eine unzureichende Materialmenge zur Verstärkung der Kanten. Ein weiteres Problem ist das Durchbiegen bei Belastung, welches im Thermoformprozess auftreten kann und zu plastischen Verformungen oder Materialschädigungen führen kann. Die positiven Eigenschaften von Polyethylen sind unter anderem der Rohstoffpreis, die Verfügbarkeit, die Schlagfestigkeit, die chemische Beständigkeit bei vielen Säuren und Laugen, etc. In der Praxis zum Thermoformen verwendbare orientierte Polyethylenfolien konnten bis dato noch nicht in genügender Qualität hergestellt werden.

Ein großer Nachteil fast aller Produkte des Thermoformens ist, dass sie nicht durch die etablierten Recyclingströme erfasst werden. Insbesondere die derzeitigen Produkte, welche biaxial orientierte Folien mit Polystyrol oder Polypropylen-Copolymeren verwenden (bspw. für Anwendungen im Tieftemperaturbereich), werden in den Recyclingströmen nicht erfasst. Da Kunststoffabfälle von Verbrauchern und Gesetzgebern in aller Welt zunehmen kritisch gesehen werden und ihre Entsorgung kostenaufwändig ist, stellt dies ein zunehmendes Problem dar.

Beispiele für thermogeformte Teile aus unterschiedliche Polymeren sind neben Verpackungen (Lebensmittel, Medizin) auch Anwendungen im industriellen Bereich (Hauben, Verkleidungen für den Maschinen und Anlagenbau, Nutzfahrzeugbau, Armaturen), im Konsumgüterbereich zur Herstellung von Kühlgeräten. Biaxial orientiertes Polystyrol wird beim Thermoformen verwendet, um eine hohe Steifigkeit bei hoher Transparenz zu erreichen. Es wird häufig in Verpackungen verwendet, bei denen gewollt ist, dass das verpackte Produkt gut sichtbar ist.

Aus der EP 3 152 128 B1 ist ein mehrschichtiger thermoplastischer Film bekannt, der wenigstens 5 Schichten umfasst von denen 2 innere Schichten jeweils ein Polyethylen mit hoher Dichte (HDPE) enthalten. In einer Ausführungsform machen diese 2 inneren Schichten wenigstens 35 % der Gesamtdicke des mehrschichtigen thermoplastischen Films aus. Beispiel 1 beschreibt eine Folie, bei der die Dicke der HDPE-Lagen etwa zwei Drittel der Foliendicke ausmacht. Der mehrschichtige thermoplastische Film gemäß Beispiel 1 wird durch ein Einzelblasen-Blasfolienverfahren (single bubble) hergestellt. Die Folien werden für die Herstellung von Blistern durch Thermoformen eingesetzt.

In der US 2016/020030 A1 wird ein Verfahren zur Herstellung einer mehrschichtigen biaxial orientierten Folie offenbart. Die Folie wird in einem Dreiblasen-Blasfolienverfahren hergestellt. Die Folie enthält nicht mehr als 30 % Polyolefin, darunter LDPE und LLDPE.

Die Offenlegungsschrift DE 10 2005 041 134 A1 offenbart eine Dreilagenfolie, welche eine bedruckbare dünne Folie, eine Klebstoffschicht und eine Tiefziehfolie (fürs das Thermoformen verwendbar) aufweist. Die dünne Folie kann biaxial orientiert sein. Sie kann auch HDPE enthalten. Die Tiefziehfolie kann ebenfalls Polyethylen enthalten. Für die Tiefziehfolie ist jedoch nicht offenbart, dass sie biaxial orientiert sein kann.

Die Patenschrift EP 1 395 415 B1 offenbart eine biaxial orientierte Folie umfassend bis zu 15 Gew.-% Polyethylen. Die Offenlegungsschrift EP 1 876 010 A1 offenbart biaxial orientierte Polypropylenfolien für das Thermoformen, die aufgeschäumte Polymere enthalten können, wie zum Beispiel Polyethylen.

In der US-Patent No. 10,752,740 B2 werden biaxial orientierte Folien beschrieben, die für das Thermoformen geeignet sind.

Es wird offenbart, dass ein Gehalt von wenigstens 20 Gewichtsprozent Polypropylen notwendig ist, um die dafür notwendigen Eigenschaften zu erhalten. Die Folien können auch Polyethylene enthalten.

### Aufgabe der Erfindung

Es war die Aufgabe der vorliegenden Erfindung, eine thermoformbare Folie bereitzustellen, die möglichst sortenrein ist und daher für das Recycling geeignet ist. Die Folie soll ferner möglichst preisgünstig herstellbar sein und bevorzugt preisgünstiger als herkömmliche Folien für das Thermoformen sein.

Ferner wird angestrebt, eine Folie bereitzustellen, die möglichst günstige Barriereeigenschaften für Sauerstoff, Luft und Wasser aufweist. Bevorzugt sollen die Folien auch ein möglichst hohes E-Modul aufweisen. Die daraus hergestellten Formen sollen bevorzugt eine möglichst hohe Formstabilität aufweisen. Eine weitere Aufgabe der vorliegenden Erfindung ist es einen gleichmäßig tiefziehbaren Film zu produzieren, welcher nach dem Thermoformen eine ausgewogene Balance der mechanischen Eigenschaften aufweist. Die vorliegende Erfindung hat ferner die Aufgabe Polyethylenfolien in einer Form bereitzustellen, die für das Thermoformen geeignet ist. Zusätzlich war es die Aufgabe der vorliegenden Erfindung eine gewichtseffizienter Verpackung zu ermöglichen. Auch eine energieeffizientere Produktion von Verpackungen wird angestrebt.

Ferner ist es die Aufgabe der vorliegenden Erfindung, einen gleichmäßig tiefziehbaren Film zu produzieren, welcher nach dem Thermoformen Formkörper ergibt, die eine ausgewogene Balance der mechanischen Eigenschaften aufweisen.

### Beschreibung der Erfindung

### BOPE-Folien

Die vorliegende Erfindung betrifft eine biaxial orientierte Folie für das Thermoformen, dadurch gekennzeichnet, dass die Folie wenigstens 85 Gewichtsprozente Polyethylen und wenigstens 95 Gewichtsprozente Polyolefine, bezogen auf die gesamte Masse der Folie enthält. Die erfindungsgemäßen Folien können erfolgreich dem Thermoformen unterworfen werden.

### Effekte

Durch das biaxiale Orientieren der erfindungsgemäßen Folien werden die physikalischen Eigenschaften der Folien verbessert. Steifigkeit, Reißfestigkeit und E-Modul nehmen zu. Das E-Modul kann durch das Verstrecken je nach Verstreckungsverhältnis auf das Doppelte oder mehr gesteigert werden. Die Dichte nimmt durch das Verstrecken ab. Formteile aus den erfindungsgemäßen Folien weisen bei gleicher Dicke bessere Festigkeiten und bessere Reißfestigkeit auf als Formkörper aus den gleichen nicht orientierten Polyethylen-Gießfolien, jedenfalls soweit aus den nicht orientierten Polyethylen-Gießfolien überhaupt Formkörper herstellbar sind. Die Formkörper können daher mit weniger Material hergestellt werden und weisen eine genügend hohe Steifigkeit auf. Die vorstehend genannten Änderungen der physikalischen Eigenschaften sind von Vorteil für das Thermoformen.

Ferner weisen die mittels des erfindungsgemäßen Verfahrens aus der erfindungsgemäßen Folie hergestellten Formkörper eine höhere Durchstoßfestigkeit auf. Insgesamt führt die biaxiale Verstreckung auch zu homogeneren Eigenschaften in Längs- und Querrichtung der Folie und damit auch zu homogeneren Eigenschaften der Formkörper die aus ihnen hergestellt werden. Dies gilt insbesondere auch im Vergleich zu einer monoaxial verstreckten Folie. Auch die Dickenverteilung ist deutlich besser als bei nicht oder monoaxial orientierten Folien. Derselbe Effekt führt auch zu einer besseren Verarbeitbarkeit der Folien.

Ferner werden die optischen Merkmale der Folie verbessert. Transparenz und Glanz nehmen durch das Verstrecken zu, die Trübung nimmt ab. Die erfindungsgemäße Folie ist daher besonders gut geeignet für Verpackungen und ähnliches, wo der Inhalt gut sichtbar sein soll. Die Barriereeigenschaften gegenüber Sauerstoff und Luft werden durch das Verstrecken verbessert. Ferner bietet die Verwendung der erfindungsgemäßen Folien für das Thermoformen die Möglichkeit der Gewichtseinsparung bei den Produkten. Es resultiert zum Beispiel eine gewichtseffizientere Verpackung, weil die gleiche Menge Folienmaterial nach dem Verstrecken eine größere Folienfläche für die Verpackung zur Verfügung stellt. Die erfindungsgemäße Folie führt außerdem zu einer energieeffizienteren Produktion, da bei nur geringem Energieaufwand durch das Verstrecken deutlich bessere Eigenschaften erhalten werden. Ferner weisen die erfindungsgemäßen Folien gegenüber biaxial orientierten Folien aus Polypropylen oder Polystyrol, welche ebenfalls für das Thermoformen geeignet sind, alle Vorteile auf, die die Verwendung von Polyethylen mit sich bringt, wie ein geringer Rohstoffpreis, gute Verfügbarkeit, Schlagfestigkeit, eine gute chemische Beständigkeit gegenüber Säuren und Basen und so weiter.

Es ist ein weiterer Vorteil der erfindungsgemäßen Folie, dass diese durch die Verstreckung des Films beim Aufheizen im Prozess des Thermoformens nicht zum Foliendurchhang (Sagging) neigen.

Alle in Bezug auf diese Erfindung angegebenen Anteile in Gewichtsprozent sind jeweils auf die gesamte Masse der Folie bezogen, soweit nichts anderes angegeben ist. Beim Prozess des Thermoformen wird die Folie verformt und es tritt daher, wie beim Verstrecken, eine Art Verstreckung der Folie auf, die allerdings unregelmäßig ist. Zur besseren Unterscheidung der Verstreckung während des Verstrecken des Films und der Verstreckung während des Thermoformens wird folgende Nomenklatur verwendet: In Bezug Verstreckung bei der Herstellung des Films wird eines der Verben "verstrecken" oder "orientieren" verwendet, welche im Sinne der vorliegenden Erfindung die gleiche Bedeutung haben. In Bezug auf das Formen oder Verstrecken beim Thermoformen wird das Verb "verformen" (insbesondere auch in der Form "geformt" und dergleichen) verwendet.

Der hohe Anteil von Polyethylen in den im vorliegenden Verfahren eingesetzten Folien sorgt dafür, dass die Formkörper dem Recyclingkreislauf für Polyethylen zugeführt werden können. Dies ist ein wesentlicher Vorteil des hohen Polyethylen-Anteils. Auf diese Weise können die Abfälle der Folie, die bei der Produktion der Folie oder der Formkörper anfallen, kostengünstig beseitigt werden, nämlich durch Recycling. Eine teure Entsorgung der Abfälle ist nicht mehr notwendig. Ferner unterliegen die aus den erfindungsgemäßen Folien hergestellten Formkörper nicht den Beschränkungen für nicht recycelbare Kunststoffwaren, was Ihre Akzeptanz im Handel deutlich erhöht. Ferner ist die Akzeptanz bei Verbrauchern dadurch deutlich erhöht.

### Zusammensetzung

Die erfindungsgemäßen Folien können vollständig aus Polyethylen bestehen, also 100 Gewichtsprozente Polyethylen enthalten. Die Folien müssen jedoch mindestens 85 Gewichtsprozente Polyethylen enthalten. Wenn in dem erfindungsgemäßen Verfahren eine Polyethylenfolie eingesetzt wird, die weniger als 95 Gewichtsprozente Polyethylen enthält, muss die Folie wenigstens so viel andere Polyolefine enthalten, dass die Summe des Massenanteils aller Polyolefine einschließlich des Polyethylens wenigstens 95 Gewichtsprozente beträgt. Nur der Klarheit halber sei hier betont, dass im Sinne der vorliegenden Anmeldung Polyethylen ebenfalls ein Polyolefin ist. Erfindungsgemäße Folien die wenigstens 90 Gewichtsprozente Polyethylen enthalten sind besonders bevorzugt. Am meisten bevorzugt sind erfindungsgemäße Folien, die wenigstens 95 Gewichtsprozent Polyethylen enthalten. Alle erfindungsgemäßen Folien entsprechen den Bestimmungen für die meisten Recyclingkreisläufe von Polyethylen.

Unter den Begriff Polyethylen fallen dabei Homopolymere als auch Copolymere, die als Monomere neben Ethylen bis zu 6 Gewichtsprozent und bevorzugt nicht mehr als 5 Gewichtsprozente andere Olefine als Comonomere enthalten können. Ganz besonders bevorzugt sind die anderen Olefine in einer Menge von bis zu 3 Gewichtsprozent und am meisten bevorzugt in einer Menge im Bereich von 0,1 bis 3 Gewichtsprozent in den Copolymeren enthalten. Diese Mengenangaben sind jeweils bezogen auf die Gesamtmasse des Copolymers. Bevorzugt handelt es sich bei diesen Olefinen um C3- bis C20-Olefine. Ebenfalls bevorzugt handelt es sich bevorzugt um alpha-Olefine. Besonders bevorzugt sind C3- bis C20-alpha-Olefine. Die alpha-Olefine sind wiederum bevorzugt ausgesucht aus der Gruppe bestehend aus Propen, 1-Butene, 1-Pentene, 4-Methyl-1-Penten, 1-Hexen, 1-Okten und 1-Decen und besonders bevorzugt ausgesucht aus der Gruppe bestehend aus Propen, 1-Buten, 1-Hexen und 1-Okten. Als weitere mögliche Comonomere sind zum Beispiel cyclische Olefine zu nennen. Bei den Comonomeren kann es sich auch um Olefine handeln, die funktionelle Gruppen enthalten. Solche Olefine können ausgesucht sein aus der Gruppe bestehend aus Dienen, aromatischen Olefinen, Carbonsäuregruppen enthaltende Olefine, Estergruppen enthaltende Olefine und Cyanid-Gruppen enthaltende Olefine. Als Dien wäre beispielsweise Butadien zu nennen. Ein Beispiel für ein geeignetes aromatisches Olefin ist Styrol. Als Beispiele für Carbonsäuregruppen enthaltende Olefine und Estergruppen enthaltende Olefine sind Acrylsäure und ihre Ester, Methacrylsäure und ihre Ester und Maleinsäure zu nennen, wobei letztere bevorzugt ist. Monomere die andere Heteroatome als Sauerstoffatome enthalten sind jedoch nicht bevorzugt.

Im Sinne der Angaben des Polyethylen-Gehalts der im erfindungsgemäßen Verfahren verwendeten Folien werden die hierin beschriebenen Copolymere des Polyethylens vollständig dem Polyethylen-Anteil zugerechnet. So gilt zum Beispiel eine Polyethylenfolie, die 85 Gewichtsprozente eines Polyethylen-Copolymeren enthält und keine weiteren Polymere, die Ethylen-Monomere enthalten, im Sinne dieser Anmeldung als eine Polyethylenfolie, die 85 Gewichtsprozente Polyethylen enthält.

Es können ferner Gemische verwendet werden, die mehrere verschiedene Polyethylen-Homopolymere enthalten oder Gemische, aus mehreren verschiedene Polyethylen-Copolymeren. Ferner können Gemische von einem oder mehreren Polyethylen-Homopolymeren mit einem oder mehreren Polyethylen-Copolymeren verwendet werden.

Bevorzugt sind erfindungsgemäße Folien, welche dadurch gekennzeichnet sind, dass sie ein Polyethylen enthalten, das ausgesucht ist aus der Gruppe bestehend aus Polyethylen mit hoher Dichte (High-Density Polyethylen; HDPE), Polyethylen mit mittlerer Dichte (Medium-Density Polyethylen; MDPE) und lineares Polyethylen niedriger Dichte (Linear Low Density Polyethylen; LLDPE) und Gemischen davon. Besonders bevorzugt enthalten die erfindungsgemäße Folien ein Polyethylen, welches ausgesucht ist aus der Gruppe bestehend aus Polyethylen mit hoher Dichte (HDPE), lineares Polyethylen niedriger Dichte (LLDPE) und Gemischen davon. Ganz besonders bevorzugt enthalten die erfindungsgemäßen Folien Polyethylen mit hoher Dichte (HDPE). Besonders bevorzugt enthalten die erfindungsgemäßen Folien ausschließlich die vorgenannten Polyethylene.

Enthält die erfindungsgemäße Folie neben Polyethylen andere Polyolefine, so kann es sich dabei um beliebige Polyolefine handeln. Bevorzugt handelt es sich um Polyolefine, die alpha-Olefine als Monomere enthalten. Bevorzugt enthalten sie ausschließlich alpha-Olefine als Monomere. Die Polyolefine sind bevorzugt ausgesucht aus der Gruppe bestehend aus Polypropylen, Polybutylen, Polyhexen und Polyocten. Ferner kann es sich bei den Polyolefinen zum Beispiel um ein Polyolefin handeln, dass ausgesucht ist aus der Gruppe bestehend aus Polystyrol, Polyacrylsäure, Polymethacrylsäure und Polyacrylsäureester, Polymethacrylsäureester. Die Polyolefine, die neben Polyethylen in den Folien des erfindungsgemäßen Verfahrens eingesetzt werden, können im Gemische (Blends) mit dem Polyethylen oder den Polyethylenen vorliegen oder davon getrennt zum Beispiel in anderen Schichten, eingesetzt werden. Sie können zum Beispiel als gesonderte Schicht in der Polyethylenfolie verwendet werden.

Bevorzugt sind ferner Polyethylene, die durch Ziegler-Natta-Polymerisation hergestellt werden. Ferner bevorzugt sind Polyethylene, die durch Suspensionspolymerisation hergestellt werden. Am meisten bevorzugt sind Polyethylene, die durch eine Ziegler-Natta-Polymerisation in Suspension hergestellt werden und zwar insbesondere HDPE, welches mit Hilfe dieser Methode hergestellt wird.

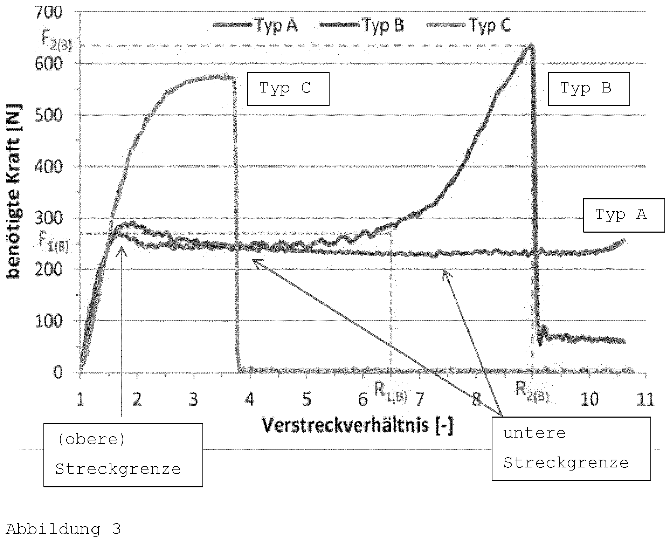

Die erfindungsgemäße biaxial orientierte Folie ist geeignet zur Verwendung in einem Thermoformprozess. Das Orientieren (auch Strecken oder Recken) der Folie verbessert die Eigenschaften der Folie und verbessert so deren Eignung für das Thermoformen. Das Recken von Folien und das Thermoformen sind ähnliche Prozesse. Beim Strecken werden die Folien erhitzt bis sie leicht verformbar sind und in Länge und/oder Breite, also senkrecht zur Dicke gestreckt. Durch die plastischen Eigenschaften des Folienmaterials verändern die Folien dadurch ihre Form (Länge, Breite und Höhe). Die Verformung erfolgt im Wesentlichen regelmäßig über die gesamte Folie. Beim Thermoformen werden die Folien erhitzt bis sie leicht verformbar sind und dann durch Einwirkung einer Kraft senkrecht auf einer der Oberflächen, also in Richtung der Dicke, verformt. Auch dabei wird das Folienmaterial gestreckt, aber unregelmäßig und nicht in der Ebene der Folienoberfläche. Einige Teile der Folie werden dabei stark verformt (gestreckt) und andere nur gering oder überhaupt nicht. Das Vermögen von Polyethylenen gedehnt (orientiert) zu werden, ist jedoch begrenzt. Es handelt sich um eine Materialeigenschaft, die als Reißdehnung dem Spannungs-Dehnungs-Diagramm des jeweiligen Polyethylens entnommen werden kann. Damit die erfindungsgemäßen Folien beim Thermoformen an den stark verstreckten Stellen der Folien nicht reißen, sollten sie daher eine hohe Reißdehnung aufweisen. Da sowohl das Orientieren als auch das Thermoformen kurz unterhalb des Schmelzpunktes der Polyethylene durchgeführt werden, ist die Reißdehnung bei einer solchen Temperatur relevant. Daher ist eine erfindungsgemäße Folie dadurch gekennzeichnet, dass das Polyethylen eine Reißdehnung von wenigstens 7 im Spannungs-Dehnungs-Diagramm aufweist, wobei das Spannungs-Dehnungs-Diagramm bei einer Temperatur von 10°C unter dem Schmelzpunkt des Polyethylens gemessen wird und der Schmelzpunkt mittels dynamischer Differenzkalorimetrie mit einer Erwärmungsrate von 10 °C pro Minute bestimmt wird. Besonders bevorzugt beträgt die Reißdehnung wenigstens 8 und ganz besonders bevorzugt wenigstens 9. Die Reißdehnung wird hierbei als Vielfaches der ursprünglichen Länge der Probe angegeben. Dies wird illustriert anhand von Abbildung 3. Diese zeigt die Spannungs-Dehnungs-Diagramme von 3 verschiedenen Polyethylenen. Wie man sieht, reißt das Polyethylen vom Typ C bei einem Verstreckungsverhältnis von etwa 3,7. Diese Folie entspricht diesem Merkmal daher nicht. Polyethylene A und B reißen bei einem Verstreckungsverhältnis von etwa 10,7 und etwa 9. Diese beiden Polyethylene weisen also eine Reißdehnung von 9 oder mehr auf.

Die Untersuchungen der Erfinder haben weiter ergeben, dass solche Polyethylene besonders geeignet sind, die im plastischen Bereich des Spannungs-Dehnungs-Diagramm eine möglichst geringe Veränderung der Spannung bei Vergrößerung der Dehnung aufweisen. Hohe Spannungsänderungen führen dazu, dass bei Einwirkung einer Kraft beim Thermoformen verschiedene Wanddicken gebildet werden, wobei auch sehr dünne Wanddicken entstehen können oder sogar Risse, wenn die Spannungsänderungen zu groß sind. Bevorzugt ist es daher, dass das Spannungs-Dehnungs-Diagramm des verwendeten Polyethylens im plastischen Bereich eine in etwa gerade Linienform aufweist. Diese Eigenschaft findet sich besonders bei zähharten Polyethylenen (siehe Typen A und B in Abbildung 3). Diese weisen eine Streckgrenze auf, nach der die Spannung etwas sinkt. Danach zeigen diese Kurven in der Regel zumindest teilweise einen in etwa geraden Verlauf. Bevorzugt ist daher eine erfindungsgemäße Folie die dadurch gekennzeichnet ist, dass das Spannungs-Dehnungs-Diagramm des Polyethylens eine obere Streckgrenze aufweist und die Streckspannung die höchste Spannung im Spannungs-Dehnungs-Diagramm ist, wobei das Spannungs-Dehnungs-Diagramm wie vorstehend angegeben gemessen wird. Die Streckspannung ist die Spannung bei der Streckgrenze. Auch dies ist anhand der Abbildung 3 illustriert. Typ C weist keine Streckgrenze auf. Typ A und Typ B weisen eine Streckgrenze auf. Typ B weist jedoch bei höheren Dehnungen Spannungen auf, die oberhalb der Streckspannung liegen. Bei Typ A ist dies jedoch nicht der Fall und dieser Typ ist besonders geeignet, weil sein Spannungs-Dehnungs-Diagramm keine Spannung aufweist, die oberhalb der Streckspannung liegt.

Es ist ferner besonders vorteilhaft, wenn die Spannung im Spannungs-Dehnungs-Diagramm des Polyethylens bei Dehnungswerten, die größer sind als die Streckdehnung (Dehnung bei der Streckgrenze) nicht oder nur geringfügig ansteigt. Steigt die Spannung an irgendeinem Punkt nach der Streckgrenze an, so bildet die Kurve einen Umkehrpunkt, die untere Streckgrenze, wie in Abbildung 3 für die Polyethylene vom Typ A und B angezeigt. Ein solcher Anstieg wird Dehnverfestigung (Stressstrain-hardening) genannt. Für diesen Fall ist eine erfindungsgemäße Folie bevorzugt, die dadurch gekennzeichnet ist, dass das Spannungs-Dehnungs-Diagramm des Polyethylens zusätzlich eine untere Streckgrenze aufweist und alle Spannungswerte bei höheren Dehnungswerten als der Dehnung bei der unteren Streckgrenze geringer sind als der Mittelwert aus Streckspannung und der Spannung bei der unteren Streckgrenze.

Noch mehr bevorzugt ist eine erfindungsgemäße Folie, die dadurch gekennzeichnet ist, dass das Spannungs-Dehnungs-Diagramm des Polyethylens überhaupt keine Dehnverfestigung aufweist. Solche Spannungs-Dehnungs-Diagramme weisen eine obere Streckgrenze, aber keine untere Streckgrenze auf. Es tritt also bei höheren Dehnungen als der Streckdehnung keine Erhöhung der Spannung auf.

### Eigenschaften

Bevorzugt sind erfindungsgemäße Folien, die dadurch gekennzeichnet sind, dass ihr E-Modul 800 MPa beträgt. Besonders bevorzugt beträgt das E-Modul wenigstens 1000 MPa und ganz besonders bevorzugt wenigstens 1100 MPa. Für die meisten Anwendungen beim Thermoformen ist ein hohes E-Modul von Vorteil. Folien mit hohem E-Modul verleihen dem hergestellten Formteil neben einer hohen Festigkeit und Steifigkeit eine hohe Formstabilität, welche wichtig sind, um die gewünschte Form des Formkörpers zu erzeugen und zu erhalten.

Bevorzugt weisen die erfindungsgemäßen Folien einen Wärmeschrumpf in Längsrichtung von höchstens 5 %, besonders bevorzugt von höchstens 3 % und ganz besonders bevorzugt von höchstens 2 % auf. Ferner weisen die erfindungsgemäßen Folien einen Wärmeschrumpf in Querrichtung (TD) von höchstens 5 %, besonders bevorzugt von höchstens 3 % und ganz besonders bevorzugt von höchstens 2 % auf. Es ist ebenfalls bevorzugt, dass die erfindungsgemäßen Folien sowohl in Längsrichtung als auch in Querrichtung einen Wärmeschrumpf von höchstens 5 %, besonders bevorzugt von höchstens 3 % und ganz besonders bevorzugt von höchstens 2 % aufweisen. Der Wärmeschrumpf wird jeweils gemäß BMS TT 0,9 bei 100 °C und einer Dauer von 5 min gemessen.

Die erfindungsgemäßen Folien weisen bevorzugt eine Dicke im Bereich von 25 µm bis 2000 µm auf. Besonders bevorzugt sind erfindungsgemäße Folien mit einer Dicke im Bereich von 100 bis 2000 µm. Ganz besonders bevorzugt sind erfindungsgemäße Folien mit einer Dicke im Bereich von 100 bis 1000 µm. und am meisten bevorzugt sind Folien mit einer Dicke im Bereich von 150 bis 500 µm. Hierbei handelt es sich um die Foliendicken, wie sie nach DIN 53370 bestimmt werden. Stärkere Foliendicken können auch durch laminieren biaxial orientierter dünnerer Folien erhalten werden. Folien mit solchen Dicken ergeben nach dem Thermoformen Formkörper mit für die meisten industriellen Zwecke geeigneten Dicken. Ferner ist eine erfindungsgemäße Folie bevorzugt, die einen 2Sigma-Wert der Verteilung der Foliendicke von 15 % oder weniger aufweist. Besonders bevorzugt weisen die erfindungsgemäßen Folien einen 2Sigma-Wert der Verteilung der Foliendicke von 10 % oder weniger und ganz besonders bevorzugt einen 2Sigma-Wert der Verteilung der Foliendicke von 7 % oder weniger auf. Am meisten bevorzugt sind erfindungsgemäßen Folien mit einem 2Sigma-Wert der Verteilung der Foliendicke von 5 % oder weniger.

Die Breite der erfindungsgemäßen Folien liegt bevorzugt im Bereich von 10 bis 50 cm und besonders bevorzugt im Bereich von 20 bis 30 cm.

Ein weiterer bevorzugter Gegenstand der vorliegenden Erfindung ist eine biaxial orientierte Folie für das Thermoformen, die dadurch gekennzeichnet ist, dass die Folie wenigstens 85 Gewichtsprozente Polyethylen und wenigstens 95 Gewichtsprozente Polyolefine, bezogen auf die gesamte Masse der Folie enthält, wobei das Polyethylen eine Reißdehnung von wenigstens 8 im Spannungs-Dehnungs-Diagramm aufweist, worin das Spannungs-Dehnungs-Diagramm des Polyethylens eine obere Streckgrenze aufweist und die Streckspannung die höchste Spannung im Spannungs-Dehnungs-Diagramm ist und worin die Folie eine Dicke im Bereich von 25 µm bis 2000 µm, einen 2Sigma-Wert der Dickenverteilung von 10 % oder weniger aufweist, einen Schrumpf in Längs- und Querrichtung von höchstens 5 % aufweist und worin das Verstreckungsverhältnis in Längs- und in Querrichtung im Bereich von 1,2 bis 5,5 liegt, wobei das Spannungs-Dehnungs-Diagramm bei einer Temperatur von 10°C unter dem Schmelzpunkt des Polyethylens gemessen wird und der Schmelzpunkt mittels dynamischer Differenzkalorimetrie mit einer Erwärmungsrate von 10 °C pro Minute bestimmt wird.

Ein weiterer bevorzugter Gegenstand der vorliegenden Erfindung ist eine biaxial orientierte Folie für das Thermoformen, die dadurch gekennzeichnet ist, dass die Folie wenigstens 80 Gewichtsprozente Polyethylen und wenigstens 95 Gewichtsprozente Polyolefine, bezogen auf die gesamte Masse der Folie enthält, wobei das Polyethylen eine Reißdehnung von wenigstens 8 im Spannungs-Dehnungs-Diagramm aufweist, worin entweder (1) das Spannungs-Dehnungs-Diagramm des Polyethylens eine obere und eine untere Streckgrenze aufweist und alle Spannungswerte bei höheren Dehnungswerten als der Dehnung bei der unteren Streckgrenze geringer sind als der Mittelwert aus Streckspannung und der Spannung bei der unteren Streckgrenze oder (2) das Spannungs-Dehnungs-Diagramm des Polyethylens eine obere Streckgrenze aufweist und keine Dehnverfestigung zeigt und worin die Folie eine Dicke im Bereich von 25 µm bis 1000 µm, einen 2Sigma-Wert der Dickenverteilung von 7 % oder weniger aufweist, einen Schrumpf in Längs- und in Querrichtung von höchstens 3 % aufweist und worin das Verstreckungsverhältnis in Längs- und in Querrichtung im Bereich von 1,2 bis 5,0 liegt, wobei das Spannungs-Dehnungs-Diagramm bei einer Temperatur von 10 °C unter dem Schmelzpunkt des Polyethylens gemessen wird und der Schmelzpunkt mittels dynamische Differenzkalorimetrie mit einer Erwärmungsrate von 10 °C pro Minute bestimmt wird.

Ein weiterer bevorzugter Gegenstand der vorliegenden Erfindung ist eine biaxial orientierte Folie für das Thermoformen, die dadurch gekennzeichnet ist, dass die Folie wenigstens 80 Gewichtsprozente Polyethylen und wenigstens 95 Gewichtsprozente Polyolefine, bezogen auf die gesamte Masse der Folie enthält, wobei das Polyethylen eine Reißdehnung von wenigstens 9 im Spannungs-Dehnungs-Diagramm aufweist, worin entweder (1) das Spannungs-Dehnungs-Diagramm des Polyethylens eine obere und eine untere Streckgrenze aufweist und alle Spannungswerte bei höheren Dehnungswerten als der Dehnung bei der unteren Streckgrenze geringer sind als der Mittelwert aus Streckspannung und der Spannung bei der unteren Streckgrenze oder (2) das Spannungs-Dehnungs-Diagramm des Polyethylens eine obere Streckgrenze aufweist und keine Dehnverfestigung zeigt und worin die Folie eine Dicke im Bereich von 150 µm bis 500 µm, einen 2Sigma-Wert der Dickenverteilung von 5 % oder weniger aufweist, einen Schrumpf in Längs- und in Querrichtung von höchstens 2 % aufweist und worin das Verstreckungsverhältnis in Längs- und in Querrichtung im Bereich von 1,2 bis 3 liegt, wobei das Spannungs-Dehnungs-Diagramm bei einer Temperatur von 10°C unter dem Schmelzpunkt des Polyethylens gemessen wird und der Schmelzpunkt mittels dynamische Differenzkalorimetrie mit einer Erwärmungsrate von 10°C pro Minute bestimmt wird.

Die erfindungsgemäßen Folien können eine oder mehrere Schichten aufweisen und sind daher Einlagenfolien oder Mehrlagenfolien. Bevorzugt weisen Sie bis zu 9 Schichten auf. Im Folgenden werden einige bevorzugte Folien beschrieben:
(i) Typenreine, sortenreine, sortenähnliche Folien

Die in den erfindungsgemäßen Folien enthaltenen Polymere sind bevorzugt typenrein, sortenrein oder sortenähnlich gemäß DIN EN ISO 11469 sein. Die Polymere können ausgesucht sein aus der Gruppe bestehend aus purem Polyethylen mit hoher Dichte (HDPE), linearem Polyethylen niedriger Dichte (LLDPE) und Mischungen davon. Besonders bevorzugt sind erfindungsgemäße Folien, die ausschließlich Polyethylen mit hoher Dichte (HDPE) oder ausschließlich lineares Polyethylen niedriger Dichte (LLDPE) umfassen. Folien, die ausschließlich Polymere enthalten, die typenrein oder sortenrein sind, können ganz besonders gut dem Recycling zugeführt werden.

### (ii) Folien für die Metallisierung und metallisierte Folien

Um die Barriereeigenschaften und oder die optischen Eigenschaften und oder weitere Eigenschaften der erfindungsgemäßen Folien zu verbessern, können die erfindungsgemäßen Folien metallisiert werden. Hierunter wird das Aufbringen einer Metall oder Metalloxidschicht auf die Außenseite wenigstens einer der beiden Außenschichten der Folie verstanden. Um die Haftung der Metall- oder Metalloxidschicht zu verbessern, wird bevorzugt auf die äußere Polyethylen-Schicht eine Schicht mit hoher Oberflächenenergie aufgebracht. Die Schicht kann zum Beispiel ausgesucht sein aus der Gruppe bestehend aus Polyamid-Schichten, Polyurethan-Schichten, Ethylen-Vinylalkohol-Copolymer-Schichten (EVOH), Terpolymer-Schichten mit Oberflächenbehandlung, Polyethylenterephthalat-Schichten (PET), biaxial orientierte Polypropylen-Schichten mit Oberflächenbehandlung durch Corona, Plasma oder Flamme. Weitere geeignete Schichten sind dem Fachmann bekannt. Auf die Schicht mit hoher Oberflächenenergie wird dann eine Metall- oder eine Metalloxidschicht aufgebracht. Eine beispielhafte Struktur für eine solche Folie enthält eine Außenschicht aus HDPE, eine Basisschicht aus HDPE und eine weitere Außenschicht mit hoher Oberflächenenergie, wobei letztere bevorzugt Polyurethan enthält. In einer weiteren Ausführungsform dieser Folie wird zwischen der Basisschicht aus HDPE und der Außenschicht mit hoher Oberflächenenergie noch eine Schicht eingefügt, die einen Haftvermittler enthält. Der Haftvermittler kann ausgesucht sein aus der Gruppe bestehend aus einem Polymer, welches Maleinsäure als Monomer enthält, chlorierten Polyolefinen (CPOs), acylierten Polyoplefinen (APOs), Silan-Haftvermittlern und metallorganischen Haftvermittlern. Bevorzugt ist der Haftvermittler ein Polymer, welches Maleinsäure als Monomer enthält. Dabei handelt es sich bevorzugt um ein Ethylen-Maleinsäure-Copolymer.

### (iii) Folien mit Additiven

Die erfindungsgemäßen Folien können Hilfsstoffe enthalten. Die Hilfsstoffe können ausgesucht sein aus der Gruppe bestehend aus Nukleierungsmitteln, insbesondere alpha-Nukleierungsmitteln, Antiblockmitteln, Haftvermittlern, Dispergiermitteln, Stabilisierungsmitteln, Gleitmitteln, Antistatikmitteln, feste Weichmachermittel, Aktivierungsmitteln, Promotoren, Alterungsschutzmitteln, Mitteln zur Vorbeugung von Brandflecken, Bindemitteln, hitzebeständigen Mitteln, Initiatormitteln, Polymerisationskatalysatoren, Emulgatoren, Weichmachern, Wärmestabilisatoren, Lichtstabilisatoren, Flammschutzmitteln, Formtrennmitteln, Modifier, Clarifier und Antifog. Dispergiermittel erlauben das Verstrecken von Folien mit hohem Anteil an Füllstoff (zum Beispiel Antiblockmitteln) und führen zu einer glatten Oberfläche. Wenn diese Hilfsstoffe enthalten sind, enthält die erfindungsgemäße Folie bevorzugt Hilfsstoffe in einer Menge von weniger als 5 Gewichtsprozenten, bezogen auf die Gesamtmasse der Folie. Eine erfindungsgemäße Folie enthält besonders bevorzugt weniger als 3 Gewichtsprozente Hilfsstoffe. Bevorzugt sind die Hilfsstoffe wenigstens in einer Menge von 0,1 Gewichtsprozenten anwesend und mehr bevorzugt in einer Menge von 1 Gewichtsprozent. Wenn die Folie Streckmittel enthält, sind diese bevorzugt ausgesucht aus der Gruppe bestehend aus Polyethylenwachsen und Polypropylenwachsen. Bevorzugt sind Polypropylenwachse. Geeignet sind zum Beispiel kommerziell erhältliche Polyethylenwachse und Polypropylenwachse vom Typ Licocene^{®} der Firma Clariant in Frankfurt/Main, Deutschland.

Eine beispielhafte Ausführungsform einer solchen Folie ist eine Folie mit einer Dreilagenstruktur mit zwei Außenschichten, die HDPE enthalten und einer inneren Basisschicht, die HDPE enthält. Bevorzugt enthalten die drei Schichten ausschließlich HDPE als Polymer. Die in diesen Folien enthaltenen Polymere sind daher typenrein oder sortenrein und die Folien sind somit gut recycelbar. Eine oder mehrere diese Schichten können, wie vorstehend beschrieben, mit Hilfsstoffen versehen sein.

### (iv) Gefärbte Folien

Die erfindungsgemäßen Folien können auch Farbstoffe enthalten. Dies erlaubt die Individualisierung der Folien für bestimmte Anwendungen und ihre Anpassung an bestimmte Anforderungen. Es kann sich zum Beispiel um Weißfolien handeln, die den Vorteil haben, dass Primer für die Bedruckung eingespart werden kann. Die Folien können auch unterschiedliche Printzonen aufweisen. Dies führt auch zur Einsparung von Farbe beim Bedrucken der Folien. Ferner sind solche Folien in der Regel besser recycelbar als entsprechende bedruckte Folien. Als beispielhafte Strukturen wären zu nennen eine Einlagenfolie aus Polyethylen, welches einen Farb-Masterbatch enthält. Ferner eine Dreilagenfolie, bei der die drei Lagen HDPE oder LLDPE enthalten (bevorzugt HDPE) und eine oder beide Außenschichten ein Masterbatch enthalten. Die bevorzugte Farbe ist weiß.

### (v) Opake Folie

Hierbei handelt es sich um erfindungsgemäße Folien, in denen wenigstens eine Schicht mit Hohlräumen versehen ist ("cavitated"). Solche Folien eignen sich ideal für Form Fill Seal (FFS) Maschinen, da sie eine weiche Textur aufweisen. Diese erfindungsgemäßen Folien weisen ferner einen hohen Gloss, eine geringe Wasserpermeabilität, ein verringertes Gewicht auf, sind direkt bedruckbar und sind mit einer geringeren Menge Polyethylen herstellbar. Die Hohlräume können durch Zugabe von Partikeln ("Cavitating Agents") erzeugt werden. Diese Partikel können zum Beispiel Materialien enthalten, die ausgesucht sind aus der Gruppe bestehend aus Calciumcarbonat, Polybutylenterephthalat, Polymethylmethacrylat, Polyamid-6 und Mischungen von solchen Materialien. Die Partikel bestehen bevorzugt aus solchen Materialien. Bevorzugt enthält diese Schicht Calciumcarbonat-Partikel. Die Partikel können in einer Menge von bis zu 5 Gew.-% in den erfindungsgemäßen Folien enthalten sein, bezogen auf die Gesamtmasse der Folie.

Eine geeignete Ausführungsform hierfür ist eine 5-Lagen-Struktur mit einer Basisschicht, welche HDPE und Hohlräume enthält. Auf den beiden Oberflächen der Basisschicht befindet sich je eine Schicht, welche einen Blend aus LLDPE und HDPE und einen Farbstoff enthält. Auf der äußeren Oberfläche dieser Schichten befindet sich je eine Außenschicht aus LLDPE, welche ebenfalls einen Farbstoff enthalten kann. Die Schichten, welche den Blend aus HDPE und LLDPE enthalten dienen als Haftvermittler zwischen der Außenschicht, welche LLDPE enthält und der Basisschicht, welche HDPE enthält. Der Farbstoff ist in allen Schichten bevorzugt weiß. Wegen der Außenschichten aus LLDPE ist eine solche Folie siegelbar, ohne dass weitere Veränderungen daran vorgenommen werden müssen.

### (vi) Folien mit reduzierter Dichte

Hierbei handelt es sich ebenfalls um erfindungsgemäße Folien, in denen wenigstens eine Schicht mit Hohlräumen versehen ist ("cavitated"). Solche Folien eignen sich ideal für Form Fill Seal (FFS) Maschinen. Die Folien weisen ein verringertes Gewicht bei gleichen Dimensionen gegenüber Folien ohne Hohlräume auf. Dies führt zu Materialeinsparung und damit zu geringeren Kosten. Eine beispielhafte Struktur für eine solche Folie besteht aus einer Basisschicht aus HDPE, welche Hohlräume enthält und je nach gewünschter Dichte der Folie 5 bis 25 Gewichtsprozente Partikel ("Cavitating Agents") enthält, bezogen auf die Gesamtmasse der Basisschicht, wobei bei dieser Ausführungsform die Partikel nicht in die Gesamtmasse der Folie eingerechnet werden. Die Materialien können aus der vorstehenden Liste ausgewählt sein. Auf beiden Seiten diese Basisschicht kann je eine Schicht aus HDPE aufgebracht sein. Solche Folien weisen eine geringe Wasserpermeabilität auf und sind direkt bedruckbar.

### (vii) Folien umfassend Schichten die Ethyl-Vinylalkohol-Copolymere und/oder Polyamide enthalten

Diese Folien enthalten eine oder mehrere Schichten die ein Polymer enthalten, dass ausgesucht ist aus der Gruppe bestehend aus Ethyl-Vinylalkohol-Copolymere (EVOH), Polyamide und Mischungen davon. Bei den Polyamiden kann es sich auch um Polyurethane handeln. Die Vorteile solcher Folien bestehen in einer besseren Barrierewirkung gegen die Diffusion von Wasser und Sauerstoff. Zusätzlich wird die Durchstoßfestigkeit ("Puncture Resistance ") verbessert.

Als Beispiel für eine solche Folie sei eine 7-Lagen-Folie mit einer Basisschicht aus HDPE angegeben, auf deren eine Seite eine Schicht aufgebracht ist, die einen Haftvermittler enthält, auf der wiederum eine Schicht aufgebracht ist, die Ethyl-Vinylalkohol-Copolymere, Polyamide oder Mischungen davon enthält. Auf diese Schicht ist erneut eine Schicht aufgebracht, die einen Haftvermittler enthält, auf der schließlich eine Außenschicht der Folie aufgebracht ist, welche LLDPE enthält. Auf der anderen Seite der Basisschicht ist eine Schicht aufgebracht, die einen Blend aus HDPE und LLDPE enthält, auf der wiederum eine Außenschicht der Folie aufgebracht ist, die LLDPE enthält.

### (viii) Heißsiegelbare Folie die durch Co-Extrusion herstellbar sind

Diese Folien weisen eine Basisschicht auf, die wenigstens 70 Gewichtsprozente bezogen auf die gesamte Masse der Folie ausmacht, bevorzugt wenigstens 80 Gewichtsprozente und am meisten bevorzugt wenigstens 85 Gewichtsprozente. Diese Basisschicht enthält HDPE, bevorzugt wenigstens 80 Gewichtsprozente HDPE, besonders bevorzugt wenigstens 90 Gewichtsprozente und ganz besonders bevorzugt wenigstens 95 Gewichtsprozente. Am meisten bevorzugt besteht diese Basisschicht aus HDPE. Auf wenigstens einer Seite dieser Basisschicht ist eine Schicht aus einem Blend enthaltend HDPE und LLDPE aufgebracht. Auf diese Schicht ist eine Außenschicht der Folie aufgebracht, die LLDPE enthält. Eine solche Folie enthält somit mindestens 3 Lagen. Die Außenschicht sorgt dafür, dass die Folie heißsiegelbar ist. Die Schicht enthaltend das vorbeschriebene Blend dient als Haftvermittler zwischen der Basisschicht und der Außenschicht. Die das Blend enthaltende Schicht und die Außenschicht enthaltend LLDPE können auch auf beiden Seite der Basisschicht aufgebracht sein. Dann enthält die Folie 5 Lagen.

Solche Folien haben den Vorteil, dass sie ohne weitere Veränderungen siegelbar und auf Form Fill Seal (FFS) Maschinen maschinengängig sind. Gegenüber Folien, die nur eine HDPE-Schicht aufweisen entfällt hier die Notwendigkeit, einen Laminierungsschritt durchzuführen, um die Folien heißsiegelbar zu machen. Die Folien können ferner durch Co-Extrusion einfach und in einem Verfahrensschritt hergestellt werden.

### (ix) Folien mit Außenschichten die andere Polyolefine als Polyethylen enthalten

Folien die einen Anteil an Polyolefinen enthalten werden in vielen Recycling-Systemen noch als sortenrein anerkannt. Zugleich erhöhen Polyolefine, die von Polyethylen verschieden sind, die thermische Stabilität oder können den Folien andere Eigenschaften verleihen. Solche Folien können beispielsweise den folgenden Aufbau haben. Auf einer Seite einer Basisschicht aus Polyethylen ist eine Schicht aufgebracht, die ein Blend aus Polyethylen und einem Copolymer aus wenigstens zwei verschiedenen Olefinen enthält. Auf diese das Blend enthaltende Schicht ist eine Außenschicht der Folie aufgebracht, die ein Copolymer aus wenigstens zwei verschiedenen Olefinen enthält. Bevorzugt handelt es sich um dasselbe Copolymer, dass in der Schicht verwendet wurde, die das Blend enthält. Als Copolymer kommt jedes beliebige Polymer in Frage, welches der Folie die gewünschten Eigenschaften verleiht. Insbesondere kann es sich auch um Terpolymere handeln. Bevorzugt enthalten die Copolymere wenigstens ein Monomer ausgesucht aus der Gruppe bestehend aus Ethylen, Propen, 1-Buten, 1-Hexen, 1-Octen und 1-Decen. Bevorzugt enthalten die Copolymere ausschließlich Monomere, die aus dieser Gruppe ausgesucht sind. Die Copolymere können aber auch andere Monomere in Mengen bis zu 5 Gewichtsprozent enthalten. Diese anderen Monomere sind bevorzugt ausgesucht aus der Gruppe bestehend aus Acrylsäure, Acrylsäureester, Methacrylsäure, Methacrylsäureester, Acrylnitril, Butadien, Styrol und Maleinsäure.

Die andere Seite der Basisschicht kann entweder die Außenseite der Folie darstellen oder es kann die gleiche Schichtstruktur auf beiden Seiten aufgebracht werden. Bevorzugt ist auf der anderen Seite der Basisschicht jedoch eine Schicht aufgebracht, die ein Blend aus HDPE und LLDPE enthält, auf die wiederum eine Außenschicht aus LLDPE aufgebracht ist. Eine solche Folie ist zusätzlich heißsiegelbar, was für Verpackungszwecke ideal ist.

### (x) HDPE-LLDPE-Blends

Sowohl HDPE als auch LLDPE sind für den Einsatz in den erfindungsgemäßen Folien besonders bevorzugt. Ihr gemeinsamer Einsatz in einer Folie erlaubt das Einstellen verschiedener Eigenschaften der Folie durch Änderung der Mengen von HDPE und LLDPE. Ein höherer Anteil an HDPE führt zu verbesserten mechanischen Eigenschaften, wie E-Modul und Schrumpf. Ein höherer LLDPE-Anteil führt zu besseren Eigenschaften wie Optik, Durchstoßfestigkeit ("Puncture Resistance") und Rissfestigkeit. Gleichzeitig kann durch die Verwendung von Blends die Haftung von HDPE und LLDPE aneinander verbessert werden, was zu einer besseren Verbundhaftung zwischen den Schichten führt, wenn HDPE-Schichten und LLDPE-Schichten in einer Folie verwendet werden.

Diese Folien weisen eine Basisschicht auf, die HDPE enthält. Auf wenigstens einer Seite dieser Basisschicht ist eine Schicht aus einem Blend enthaltend HDPE und LLDPE aufgebracht. Auf diese Schicht ist eine Außenschicht der Folie aufgebracht, die LLDPE enthält. Eine solche Folie enthält somit mindestens 3 Lagen. Die LLDPE-Außenschicht kann heißsiegelbar ausgeführt sein. Die Schicht enthaltend das vorbeschriebene Blend dient als Haftvermittler zwischen der Basisschicht und der Außenschicht. Die das Blend enthaltende Schicht und die Außenschicht enthaltend LLDPE können auch auf beiden Seite der Basisschicht aufgebracht sein. Dann handelt es sich bevorzugt um eine 5-Lagen-Folie. Diese ist besonders bevorzugt.

### (xi) Beschichtete Folie

Hierbei handelt es sich um eine Folie, bei der wenigstens eine Außenschicht mit einem Material beschichtet worden ist. Unter Beschichtung in diesem Sinne ist zu verstehen, dass die Beschichtung nicht bei der Extrusion der Folie erzeugt worden ist. Die Beschichtung kann während des Produktionsverfahrens der Folie nach Extrusion und Abkühlung der Schmelze aufgebracht werden oder sie kann in einem getrennten Verfahren auf die fertige Folie aufgebracht werden. Die Beschichtung kann zum Beispiel durch Top Coating oder Inline Coating aufgetragen werden. Solche Beschichtungen kommen in der Regel mit sehr wenig Material aus und können sehr dünn sein. Die beschichteten Folien sind daher in der Regel noch gut für das Recycling geeignet. Die Beschichtung kann dazu dienen, der Folie verschiedene Eigenschaften zu verleihen, so können die Barriereeigenschaften gegenüber Wasser und Sauerstoff erheblich verbessert werden. Es ergibt sich so die Möglichkeit eine recycelbare Folie herzustellen, die gute Barriereeigenschaften aufweist. Bei dem Material der Beschichtung handelt es sich in der Regel nicht um Polyolefine. Es kann sich zum Beispiel um Polyurethane handeln.

Als Beispiel für eine geeignete Struktur der Folie sei eine Folie angegeben, die eine Basisschicht aufweist, die HDPE enthält, auf die zumindest auf eine Seite ein Haftvermittler (zum Beispiel Admer von der Firma Mitsui) aufgebracht ist, auf den wiederum die Beschichtung (Coating) aufgebracht ist. Bevorzugt sind beide Oberflächen der Basisschicht noch von einer weiteren Schicht bedeckt, die HDPE enthält. Auf wenigstens eine Oberfläche dieser Schichten werden dann der Haftvermittler und die Beschichtung aufgetragen. Diese 5-Lagen-Folie ist bevorzugt. Haftvermittler und Beschichtung können jedoch auch auf die Oberflächen beider HDPE-Schichten aufgebracht werden, die auf der Basisschicht aufgebracht sind.

### (xii) Laminate

Es gibt verschiedene gewünschte Eigenschaften von Folien, die durch Extrusion nicht oder nur schwer erhalten werden können. Zu diesem Zweck können die erfindungsgemäßen Folien auch durch Laminieren zu weiteren erfindungsgemäßen Folien weiterverarbeitet werden. Solche Laminate können durch Klebstofflaminierung ("Adhesive Lamination"), Extrusionslaminierung ("Extrusion Lamination"), Warmwalzen-Laminierung ("Hot-Roll Lamination") und andere dem Fachmann bekannten Verfahren hergestellt werden. Die Laminate enthalten dabei wenigstens 75 Gewichtsprozente und bevorzugt wenigstens 95 Gewichtsprozente der erfindungsgemäßen Folien als Schichten und entsprechend weniger als 25 Gewichtsprozente, bevorzugt weniger als 5 Gewichtsprozente von Schichten, die andere Materialien enthalten. Bei den anderen laminierten Schichten kann es sich zum Beispiel um eine LDPE Blasfolie handeln, die die Siegelung der laminierten Folie erlaubt. Diese Laminate könne weiterhin 5 Gewichtsprozente an Materialien enthalten, die keine Polyolefine und insbesondere keine Polyethylene sind. Solche Materialien können insbesondere verwendet werden, um eine gut tiefziehbare Folie zu erhalten. Bei diesen Materialien kann es sich um Polymere handeln, die ausgesucht sind aus der Gruppe bestehend aus Polyamiden, Ethylen-Vinylalkohol-Copolymer (EVOH), Polypropylen (PP), Polyvinylchlorid (PVC), Polystyrol (PS) und Acrylnitril-Butadien-Styrol-Copolymer (ABS). Solche Polymere können zum Beispiel eingesetzt werden, um die Barriereeigenschaften oder die Oberflächeneigenschaften der erfindungsgemäßen Folien zu modifizieren. Die erfindungsgemäßen Laminate müssen jedoch mindestens 75 Gewichtsprozente Polymere enthalten, die biaxial orientiert sind. Dies begünstigt das Thermoformen.

Bei einer solchen Folie kann es sich zum Beispiel um eine aus biaxial orientiertem HDPE bestehende Basisschicht handeln, auf die eine (nicht orientierte) LLDPE Blasfolie laminiert wurde. Mit einer solchen Folie kann eine hermetische Siegelung nach dem Thermoformen erreicht werden.

### (xiii) Laminate verschiedener erfindungsgemäßer Folien

Die erfindungsgemäßen Folien und insbesondere die unter den Punkten (i) bis (vii) genannten erfindungsgemäßen Folien können auch miteinander laminiert werden. Dies erlaubt es verschiedene Eigenschaften miteinander zu kombinieren, die einer Folie durch einen Extrusions-Prozess nicht verliehen werden können.

Bei einer solchen Folie kann zum Beispiel um eine aus biaxial orientiertem HDPE bestehende Basisschicht handeln, auf die eine ebenfalls biaxial orientierte LLDPE-Folie laminiert wurde. Auch mit einer solchen Folie kann eine hermetische Siegelung nach dem Thermoformen erreicht werden.

Die Formulierungen "HDPE-Folie", "LLDPE-Folie" "HDPE-Schicht", "LLDPE-Schicht" und dergleichen beschreiben jeweils Folien oder Schichten, die die genannten Polymere enthalten oder daraus bestehen. In allen vorbeschriebenen Fällen (i) bis (xiii) ist jeweils in Fällen in denen beschrieben ist, das eine Schicht ein bestimmtes Polymer enthält (beispielsweise HDPE, LLDPE, EVOH, PA usw.) auch der Fall eingeschlossen, dass die Schicht aus diesem Polymer besteht, wenn nichts anderes vermerkt ist. So weit nicht anderes vermerkt ist, ist dies auch für alle erfindungsgemäßen Folien die bevorzugte Ausführungsform.

### Verfahren zur Herstellung BOPE

Ein weiterer Gegenstand der vorliegenden Erfindung ist ein Verfahren zur Herstellung einer erfindungsgemäßen Folie umfassend die folgenden Schritte:
- Extrusion eines Films umfassend wenigstens eine Schicht umfassend Polyethylen aus wenigstens einer Polymerschmelze,
- Kühlen des Films unter Bildung einer Folie,
- Verstrecken der Folie in Längsrichtung und in Querrichtung, wobei das Verstreckungsverhältnis in Längsrichtung im Bereich von 1,2 bis 9 liegt und das Verstreckungsverhältnis in Querrichtung ebenfalls im Bereich von 1,2 bis 9 liegt.

Das Verfahren wird im Folgenden genauer beschrieben:
(1) Rezeptur & Dosierung

Der zur Herstellung der erfindungsgemäßen Folien verwendete Rohstoff kann entweder als solcher bereitgestellt werden oder er kann während der Herstellung der Folie in einem Extruder oder Mischer aus mehreren Zutaten durch Mischen hergestellt werden. Als Rohstoff wird bevorzugt ein Kunststoffgranulat eingesetzt. Wenn die Folie mehrere Schichten aufweist, kann für jede Schicht ein eigener Rohstoff bereitgestellt werden. Je nach gewünschter Dicke einer jeden Schicht wird der Rohstoff für jede Schicht gesondert dosiert.

Für das in diesem Verfahren verwendete Polyethylen gilt das vorstehend für die erfindungsgemäße Folie gesagte. Bevorzugt ist ein erfindungsgemäßes Verfahren, dass dadurch gekennzeichnet ist, dass das eingesetzte Polyethylen eine Dichte im Bereich von 0,89 bis 0,98 g/cm³ aufweist. Besonders bevorzugt ist eine Dichte im Bereich von 0,91 bis 0,97.

Das in dem erfindungsgemäßen Verfahren eingesetzte Polyethylen weist ferner bevorzugt einen MFI (190 °C/2,16kg) im Bereich von 0,3 bis 8 g/10min auf, besonders bevorzugt im Bereich von 0,7 bis 5 g/10min und ganz besonders bevorzugt im Bereich von 0,7 bis 3 g/10min.

Die Dicke des Gießfilms beträgt im erfindungsgemäßen Verfahren bevorzugt 300 bis 5000µm, besonders bevorzugt 500 bis 3000 µm.

### (2) Extrusion

Der Rohstoff oder die Rohstoffe oder die Zutaten dazu werden einem Extruder zugeführt. Im Extruder werden sie gemischt, und aufgeschmolzen. Wenn die Folie nur eine Schicht aufweist, wird nur ein Extruder benötigt. Wenn die Folie mehrere Schichten aufweist, wird in der Regel für jede Schicht ein eigener Extruder verwendet. Es können jedoch auch mehrere Schichten aus demselben Kunststoffgranulat hergestellt werden, wenn zwei oder mehr Schichten dieselbe Zusammensetzung aufweisen. Dann kann das Material für zwei oder mehr dieser Schichten aus demselben Extruder extrudiert werden. Ferner können alle Schichten aus einem Extruder extrudiert werden, wenn alle Schichten dieselbe Zusammensetzung aufweisen. Es kann jede beliebige Art von Extruder eingesetzt werden. Bevorzugt ist der Extruder oder sind die Extruder ausgesucht aus der Gruppe bestehend aus Einschneckenextruder, Kaskadenextruder und Zweischneckenextruder. Es können auch andere Misch- und Aufbereitungsaggregate, wie z. B. ein Buskneter oder ein Planetwalzenextruder verwendet werden. Die Extruder werden bevorzugt bei einer Temperatur im Bereich von 180 bis 280 °C, besonders bevorzugt bei einer Temperatur im Bereich von 200 bis 260 °C und am meisten bevorzugt bei einer Temperatur im Bereich von 230 bis 250 °C betrieben.

### (3) Düse und Kühlwalze

Die Schmelze wird über eine Breitschlitzdüse ausgetragen und auf einer Kühlwalze abgelegt. Wenn die Folie mehrere Schichten aufweist wird bevorzugt eine Mehrlagendüse verwendet. Bevorzugt wird eine Vorrichtung für das Anlegen des Films an die Kühlrolle (Pinningsystem) verwendet, um das Anlegen der Folie an die Kühlwalze zu verbessern. Eine bevorzugte Vorrichtung ist ein Luftmesser, also ein gerichteter Luftstrom, der eine Kraft auf den Film in Richtung der Kühlwalze ausübt. Ein Pinningsystem führt zu einem gleichmäßigeren Kontakt zwischen dem Film und der Kühlrolle und damit zur Ausbildung einer glatten und ebenen Gießfolie.

Die Temperatur der Kühlwalze liegt bevorzugt im Bereich von 20 bis 100 °C. Enthält die an die Kühlwalze angelegte Schicht einen hohen Anteil an HDPE, so sollte die Temperatur der Folie bevorzugt auf höhere Temperaturen in diesem Bereich eingestellt werden. Enthält die an die Kühlwalze angelegte Schicht mehr als 60 Gewichtsprozente HDPE, so liegt die Temperatur der Kühlwalze bevorzugt in einem Bereich von 60 bis 100 °C, besonders bevorzugt in einem Bereich von 70 bis 100 °C und ganz besonders bevorzugt in einem Bereich von 75 bis 90 °C. Wenn die Schicht, die an die Kühlwalze angelegt wird leichter an die Kühlrolle angelegt werden kann als HDPE enthaltende Schichten (zum Beispiel LLDPE), so kann die Temperatur der Kühlrolle niedriger sein. Bei einem hohen Anteil an LLDPE in der einzigen Schicht der Folie oder in der Schicht der Folie, die an die Kühlrolle angelegt wird, sollte die Temperatur der Folie bevorzugt auf geringere Temperaturen in diesem Bereich eingestellt werden. Enthält diese Schicht mehr als 60 Gewichtsprozente LLDPE, so liegt die Temperatur der Kühlrolle bevorzugt in einem Bereich von 20 bis 50 °C, besonders bevorzugt in einem Bereich von 25 bis 45 °C und ganz besonders bevorzugt in einem Bereich von 30 bis 40 °C.

Um effektiver zu Kühlen kann die Folie zusätzlich durch ein Kühlbad geleitet werden. Das Kühlbad wird bevorzugt im Bereich der Kühlwalze installiert. Das Kühlbad ist bevorzugt ein Wasserbad. Wenn zum Kühlen zusätzlich ein Wasserbad eingesetzt wird, kann die Kühlwalze in einem Wasserbad drehbar gelagert werden, wobei üblicherweise die Kühlwalze mit mehr als der Hälfte in das Wasserbad eintaucht. Eine entsprechende Kühlwalze ist beispielsweise aus der DE 197 05 796 C2 bekannt. Die Kühlwalze kann auch von auch von innen her gekühlt werden.

### (4) Verstreckung

Die so hergestellte Gießfolie wird anschließend in Längsrichtung (machine direction; MD) und in Querrichtung (transverse direction; TD) verstreckt. Im erfindungsgemäßen Verfahren liegt das Verstreckungsverhältnis in Längsrichtung und in Querrichtung bevorzugt im Bereich von 1,2 bis 5,5. Die durch ein solches Verfahren erhaltenen Folien erlauben die Herstellung von Formkörper mit einfachen Formen, wie sie auch mit biaxial orientiertem Polystyrol möglich sind, aus den erfindungsgemäßen Folien, ohne dass die Folien beim Thermoformen reißen oder eine stark ungleichmäßige Dickenverteilung ergeben. Das Verstreckungsverhältnis im erfindungsgemäßen Verfahren liegt bevorzugt im Bereich von 1,2 bis 5,0. Ganz besonders bevorzugt liegt das Verstreckungsverhältnis im erfindungsgemäßen Verfahren im Bereich von 1,2 bis 3. Am meisten bevorzugt liegt das Verstreckungsverhältnis im erfindungsgemäßen Verfahren im Bereich von 1,2 bis 2. Diese Angaben gelten jeweils für die Längs- und die Querrichtung. Folien, die mit einem solchen Verstreckungsverhältnis hergestellt wurden, erlauben auch die Herstellung von Formkörpern mit komplizierten Formen durch Thermoformen. Solche Formkörper sind zum Beispiel aus biaxial orientiertem Polystyrol bislang nicht zugänglich.

Mit den erfindungsgemäßen verstreckten Folien können beim Thermoformen Probleme an neuralgischen Punkten (Dickengleichmäßigkeit an Ecken, Kanten etc.) auftreten, wie dies auch bei anderen biaxial orientierten Folien wie zum Beispiel Folien aus biaxial orientieren Polystyrol oder biaxial orientieren Polypropylen im Thermoformprozess zu beobachten ist. Je niedriger das Verstreckungsverhältnis im Herstellungsverfahren der erfindungsgemäßen Folien ist, desto besser können die neuralgischen Punkte im Thermoformprozess ausgeformt werden. Ziel ist daher eine möglichst niedriges Verstreckungsverhältnis im erfindungsgemäßen Verfahren bei hoher Steifigkeit, Dickengleichmäßigkeit und niedrigem Schrumpf.

Das biaxiale Orientieren oder Verstrecken kann sowohl sequentiell als auch simultan erfolgen. Verfahren zum sequentiellen und simultanen biaxialem Orientieren oder Verstrecken sind dem Fachmann bekannt. Ein Verfahren wird in der Offenlegungsschrift DE 10 2019 119293 A1 beschrieben, insbesondere in Absätzen [0045] bis [0055]. Die hier beschriebene Methode wird bevorzugt entsprechend auch für die vorliegende Erfindung verwendet.

### (5) Sequentielles Verstrecken

### a) Verstrecken in Längsrichtung

Das sequentielle Verstrecken wird bevorzugt wie folgt durchgeführt. Der wie vorstehend beschrieben hergestellte Gießfilm (Castfilm) wird einer Längsreckeinrichtung zugeführt und nach ausreichender Erhitzung in Maschinenrichtung verstreckt. Wie vorstehend angegeben kann die Verstreckung in Maschinenrichtung kann ein Verstreckungsverhältnis von 1,2 bis 9 aufweisen. Die Folie wird normalerweise zwischen Walzenpaaren mit unterschiedlicher Rotationsgeschwindigkeit verstreckt. Die Temperatur der Folie in der Längsreckmaschine liegt bevorzugt im Bereich von 30 bis 140 °C, besonders bevorzugt im Bereich von 80 bis 120 °C. Die Geschwindigkeit der Folie beim Verstrecken in Längsrichtung beträgt hierbei bis zu 600 m/min.

### b) Verstrecken in Querrichtung

Das Verstrecken in Querrichtung erfolgt bevorzugt zeitlich nach dem Verstrecken in Längsrichtung. Beim Verstrecken in Querrichtung wird die Folie einer Querreckeinrichtung zugeführt. Wie vorstehend angegeben wird die Folie mit einem Verstreckungsverhältnis von 1,2 bis 9 in Querrichtung verstreckt.

In diesem Prozess wird die Folie zunächst vorgewärmt. Die Temperatur bei der transversalen Verstreckung liegt bevorzugt in einem Bereich von 50 bis 180 °C, besonders bevorzugt im Bereich von 100 bis 150 °C. Nach Eintritt der bereits in Längsrichtung verstreckten Folie in die Querreckeinrichtung wird diese seitlich von auf Schienen geführten Haltekluppen gegriffen. Durch Bewegen der Haltekluppen auf gegenüberliegenden Seiten der Folie in entgegengesetzter Richtung wird die Folie in Querrichtung verstreckt.

### (6) Simultane Verstreckung

Die erfindungsgemäßen Folien können auch in einem simultanen Reckprozess verstreckt werden. Die simultane Verstreckung kann durch ein Verfahren durchgeführt werden, dass ausgesucht aus der Gruppe bestehend aus Pantograph-Verfahren, Spindelverfahren, LISIM-Verfahren und MESIM-Verfahren. Die Temperatur bei simultaner Verstreckung liegt bevorzugt im Bereich von 50 bis 180 °C, besonders bevorzugt im Bereich von 80 bis 150 °C. Die Foliengeschwindigkeit beträgt hierbei bevorzugt 600 m/min oder weniger.

### (7) Wärmebehandlung

Bevorzugt wird die Folie nach dem Verstrecken einer Wärmebehandlung (auch Stabilisierung oder Annealing genannt) unterzogen. Dazu wird die Folie für eine bestimmte Zeit bei erhöhter Temperatur gehalten. Dies geschieht bevorzugt direkt im Anschluss an das Verstrecken. Beim sequentiellen Verstrecken wird die Wärmebehandlung bevorzugt direkt im Anschluss an das letzte Verstrecken durchgeführt. Während der Wärmebehandlung werden Spannungen innerhalb der Folie abgebaut, die durch das Verstrecken entstanden sind. Hierdurch werden die Eigenschaften über die gesamte Fläche der Folie vereinheitlicht.

### (8) Relaxierung

Bevorzugt wird während der Wärmebehandlung eine Relaxierung der Folie durchgeführt. Dies bedeutet, dass die Spannung die durch den Reckapparat auf die Folie ausgeübt wird verringert wird. Hierdurch kann sich die Folie wieder zusammenziehen. Diese Prozedur verringert die Spannungen innerhalb der Folie. Die Relaxierung kann in Längsrichtung, in Querrichtung oder in beiden Richtungen erfolgen. Bevorzugt wird die Relaxierung in beiden Richtungen durchgeführt.

Es ist weiterhin vorteilhaft, wenn der Umfang der Relaxierung im erfindungsgemäßen Verfahren im Bereich von 2 % und 12 % liegt, bevorzugt im Bereich von 5 bis 10 %. Bevorzugt gilt dies für die Relaxierung in beiden Richtungen. Durch die Relaxierung wird der Schrumpf der Folie und der Schrumpf des aus einer solchen Folie hergestellten Formkörpers reduziert.

Besonders bevorzugt ist demgemäß ein erfindungsgemäßes Verfahren, bei dem sich an das Verstrecken der folgende Verfahrensschritt anschließt:
- Durchführen einer Wärmebehandlung, wobei während der Wärmebehandlung eine Relaxierung in Längsrichtung und in Querrichtung durchgeführt wird.

Das Verstrecken der Folie und das Durchführen einer Wärmebehandlung (Annealing) mit Relaxierung führen dazu, dass der Schrumpf der Folie reduziert wird.

### (9) Inline Beschichtung

Im erfindungsgemäßen Verfahren kann die Folie während des Verstreckens beschichtet werden. Bevorzugt geschieht dies durch die Inline Coating Technologie (ILC). Dabei wird bevorzugt während des sequentiellen Verstreckens zwischen dem Verstrecken in Längsrichtung und dem Verstrecken in Querrichtung eine Beschichtung auf wenigstens eine Außenschicht der Folie aufgebracht. Dies kann zum Beispiel durch Aufbringen (insbesondere Aufdrucken) einer wässrigen Polyurethan-Suspension auf die Folienoberfläche geschehen. Beim Erhitzen vor dem Verstrecken in Querrichtung wird dann das Lösungsmittel der Suspension verdunstet und die Beschichtung wird geformt.

### (10) Weiterbehandlung

Die so hergestellte biaxial orientierte Folie gemäß der vorliegenden Erfindung kann durch folgende Arbeitsschritte weiterbehandelt werden. Die Folie kann anschließend geschnitten werden. Dies erfolgt bevorzugt an den Rändern um glatte Ränder zu erhalten. Das Dickenprofil der Folie kann gemessen werden. Gegebenenfalls kann die Folie oberflächenbehandelt werden, wenn dies gewünscht ist. Schließlich wird die Folie auf einem Wickler aufgewickelt. Ferner kann die Folie zu Schnittrollen konfektioniert werden. Weitere mögliche Behandlungsschritte sind unter anderem Metallisierung, Laminierung, Kaschierung, Beschichten (Barriere, Schutz), Bedrucken, Slitting, Oberflächenbehandlung, Laserbearbeitung, Lackierung etc.

### Verwendung

Ein weiterer Gegenstand der vorliegenden Erfindung ist die Verwendung der erfindungsgemäßen Folie für das Thermoformen.

### Verfahren zum Thermoformen

Ein weiterer Gegenstand der vorliegenden Erfindung ist ein Verfahren zur Herstellung eines Formkörpers, dadurch gekennzeichnet, dass eine erfindungsgemäße Folie durch Thermoformen verformt wird.

Das Verfahren wird bevorzugt so durchgeführt, dass ein erfindungsgemäßes Verfahren zur Herstellung der erfindungsgemäßen Folie durchgeführt wird und die so erhaltene Folie durch Thermoformen verformt wird.

Ferner ist das erfindungsgemäße Verfahren zur Herstellung eines Formkörpers gemäß der vorliegenden Erfindung bevorzugt dadurch gekennzeichnet, dass die Folie mit einem Verformungsgrad im Bereich von 2 bis 6 geformt wird.

Mit Standard Werkzeugen (bspw. Positiv- / Negativ Formen, mit Werkzeug ILLIG-Form- und Stanzwerkzeug oder als Stempel ein HYTAC-WFT (Epoxidharz mit Glashohlkugeln und Teflon, Formluftreduzierung, direkt gekühltem Niederhalter und mit seitlichen Formluftventilen)) fürs Tiefziehen können unterschiedliche Formkörper geformt werden. Für schwierig zu formende Formkörper müssen Kanten, kleine Radien etc. der Formen speziell ausgelegt werden, wie dies beim Thermoformen üblich ist. Es können zum Beispiel temperierte Werkzeuge verwendet werden. Bevorzugt wird im erfindungsgemäßen Verfahren zum Thermoformen von Folien eine Folie zunächst erhitzt bis sie gummielastisch wird und anschließend in einen dreidimensionalen Formkörper verformt. Die Temperatur bei der die Folie einen gummielastischen Zustand annimmt ist stark von der verwendeten Folie abhängig. Insbesondere hängt die notwendige Temperatur vom Material der Folie ab. Bevorzugt wird die erfindungsgemäße Folie in diesem Verfahren auf eine Temperatur im Bereich von 70 bis 150 °C erhitzt, besonders bevorzugt auf eine Temperatur im Bereich von 100 bis 140 °C und am meisten bevorzugt im Bereich von 120 bis 130 °C.

Die Verformung erfolgt bevorzugt durch mechanische oder pneumatische Umformung. Bei der pneumatischen Umformung wird an die gegenüber liegenden Oberflächen der Folie ein unterschiedlicher Gasdruck angelegt. Diese Verfahren sind dem Fachmann hinlänglich bekannt. Der Thermoformprozess kann in einem Schritt vollzogen werden. Dabei wird der Thermoformprozess bevorzugt durch einen Prozess durchgeführt, der ausgesucht ist aus der Gruppe bestehend aus Vakuum-Thermoformen, Drape-Thermoformen, Freies Thermoformen, Autoklav-Thermoformen und Diaphragma-Thermoformen. Alternativ kann ein Mehr-Schritt-Verfahren zum Thermoformen verwendet werden. Dies ist sinnvoll, wenn bestimmte Wandstärken an bestimmten Punkten der Form erreicht werden soll. Unter den 2-Schritt Verfahren ist das Druck-Formen bevorzugt. Die erfindungsgemäßen Folien können durch das Thermoformverfahren mittels Thermoformmaschinen und geeigneten Halbzeug zu unterschiedlichen Applikationen verarbeitet werden.

### Formteile aus Polyethylen

Ein weiterer Gegenstand der vorliegenden Erfindung ein vollständig oder teilweise durch Thermoformen aus einer erfindungsgemäßen biaxial orientierten Folie geformter Formkörper, dadurch gekennzeichnet, dass er wenigstens 85 Gew.-% Polyethylen und wenigstens 95 Gew.-% Polyolefine, bezogen auf die gesamte Masse des Formkörpers umfasst.

Solche Formteile können zum Beispiel Anwendung finden in als Produkte ausgesucht aus der Gruppe bestehend aus Tabletts (Trays), Kaffee Tabs, Blister-Verpackungen, Kühlschrankverkleidungen, Tieftemperatur-Verpackungen, Kunststoffbecher und insbesondere Joghurt-Becher, Verpackungen von z. B. Obst, Gemüse, Fleisch oder anderen Lebensmitteln. Bevorzugt ist ein erfindungsgemäßer Formkörper, dadurch gekennzeichnet, dass die Folie eine erfindungsgemäße Folie ist. Die erfindungsgemäße Folie in all ihren Ausführungsformen ist besonders geeignet zur Herstellung von Formkörpern.

Ebenfalls bevorzugt ist ein erfindungsgemäßer Formkörper der dadurch gekennzeichnet ist, dass in dem durch Thermoformen geformten Teil des Formkörpers das Verhältnis zwischen der größten Dicke der geformten Folie und der geringsten Dicke der geformten Folie nicht mehr als 2 beträgt.

Ebenfalls bevorzugt ist ein erfindungsgemäßer Formkörper, der dadurch gekennzeichnet ist, dass die Wasserdurchlässigkeit (ASTM E 96) nicht mehr als 8 g/m²/Tag beträgt (bei 30 °C und 90% relativer Luftfeuchtigkeit) und besonders bevorzugt nicht mehr als 5 g/(m²*Tag) beträgt. Außerdem ist ein erfindungsgemäßer Formkörper bevorzugt, der dadurch gekennzeichnet ist, dass die Sauerstoffdurchlässigkeit (ISO 15105-2) nicht mehr als 4000 cm³/m²/Tag beträgt (bei 23 °C und 0 % relativer Luftfeuchtigkeit), besonders bevorzugt nicht mehr als 2700 cm³/m²/Tag. Die erfindungsgemäßen Folien enthalten einen großen Anteil an Polyethylen oder bestehen daraus. Polyethylenfolien besitzen bereits günstige Barriereeigenschaften in Bezug auf Wasser und Sauerstoff. Durch Verstrecken der Folie werden diese weiter verbessert. Die vorliegenden Folien weisen sehr geringe 2Sigma-Werte der Dickenverteilung auf. Aus diesen Folien hergestellte Formkörper weisen daher nur eine geringe Anzahl von Fehlstellen und dünnwandigen Teilen auf. Dies führt ebenfalls zu verbesserten Barriereeigenschaften für die Formkörper. Diese Eigenschaften können weiter verbessert werden, in dem Schichten mit guten Barriereeigenschaften auf die erfindungsgemäßen Folien aufgebracht werden, wie hierin beschrieben.

Kurze Beschreibung der Abbildungen:
Abbildungen 1 und 2 zeigen erfindungsgemäße Formkörper, welche aus erfindungsgemäßen Folien hergestellt wurden.
Abbildung 3 zeigt die Spannungs-Dehnungs-Diagramme von drei verschiedenen Polyethylenen.

### Abkürzungsverzeichnis:

- ABS: Acrylnitril-Butadien-Styrol-Copolymer
- BO: biaxial orientiert
- BOPE: biaxial orientiertes Polyethylen
- BOPP: biaxial orientiertes Polypropylen
- BOPS: biaxial orientiertes Polystyrol
- CPP: gegossenes Polypropylen (cast-PP)
- Cast-PET: gegossenes Polyethylenterephthalat
- EVOH: Ethyl-Vinylalkohol-Copolymere
- HDPE: Polyethylen mit hoher Dichte (High-Density Polyethylen)
- LLDPE: lineares Polyethylen niedriger Dichte (Linear Low Density Polyethylen)
- MDPE: Polyethylen mit mittlerer Dichte (Medium-Density Polyethylen)
- MD: Längsrichtung, Maschinenrichtung (machine direction)
- PA: Polyamid
- PE: Polyethylen
- PET: Polyethylenterephthalat
- PP: Polypropylen
- PS: Polystyrol
- PU: Polyurethan
- PVC: Polyvinylchlorid
- TD: Querrichtung, Quer zur Maschinenrichtung (transversal direction)

### Beispiele:

### Messmethoden:

Foliendicken: DIN 53370; Schichtdicken: DIN EN ISO 3146; Zugfestigkeit: ASTM D 882; Bruchdehnung: ASTM D 882; Elastizitätsmodul: ASTM D 882; Reibungskoeffizient: DIN EN ISO 8295, U/U; Wärmeschrumpf: BMS TT 0,9; 100 °C/5 min und BMS TT 0,2; 120 °C/5 min; Reibungskoeffizient: DIN EN ISO 8295; Trübung: ASTM 1003; Glanz: ASTM 2457; Corona-Behandlung: ASTM 2457; Durchstoßfestigkeit: DIN EN 14477 (1,0 mm Stift runde Spitze); Sauerstoffdurchlässigkeit ISO 15105-2; bei 23 °C und 0 % relativer Luftfeuchtigkeit; Wasserdurchlässigkeit: ASTM E 96, bei 30 °C und 90 % relativer Luftfeuchtigkeit.

### Beispiel 1:

### Herstellen einer erfindungsgemäßen Folie

Es wurde eine 3-Lagen-Folie hergestellt. Polyethylen hoher Dichte (HDPE) mit einer Dichte von 0,953 g/cm³ und einem MFI von 0,9 g/10min (190 °C; 16kg), welches durch Suspensionspolymerisation mit einem Ziegler-Natta-Katalysator hergestellt wurde ("Hostalen GD 9555" von Lyondell Basell) in drei Extruder gegeben. Als Hauptextruder für die mittlere Schicht (Basisschicht) wurde ein Doppelschneckenextruder mit Vakuum und einem 200µm Filter verwendet, welcher in allen Zonen bei einer Temperatur von 200 bis 260 °C betrieben wurde. Als Co-Extruder für die beiden Außenschichten wurde je ein Einschneckenextruder ohne Vakuum und einem 200µm Filter verwendet, welche in allen Zonen bei einer Temperatur von 230 bis 250 °C betrieben wurden. Als Extrusionsdüse wurde eine 3-Lagen-Düse verwendet. Die Schmelzen wurden durch die Düse extrudiert und auf eine Kühlwalze aufgebracht. Zur Unterstützung des Andrucks der Folie an die Kühlrolle wurde ein übliches Hochdruck-Luftmesser eingesetzt. Die Temperatur der Kühlwalze betrug 70-100 °C. Die Oberflächengeschwindigkeit der Kühlwalze betrug 2 m/min. Ein Wasserbad wurde nicht verwendet. Anschließend wurde die Folie aufgewickelt.

Der Gießfilm (Cast-Film) wurde in einer Dicke von 1850 µm und einer Breite von 35 cm erzeugt. Die Mittellage hat 80 % der Filmdicke, die anderen zwei Lagen jeweils 10 % der Filmdicke. Das E-Modul der so erhaltenen Gießfolie betrug 609 MPa in Längsrichtung.

Anschließend wurde die Folie an einer Versuchsanlage verstreckt. Aus der Mitte des Films wurde ein Rechteck mit der Größe 90 x 90 mm ausgeschnitten. Dieses wurde in die Versuchsanlage eingespannt. Das Verstrecken erfolgte durch ein simultanes Verstrecken in Längs- und in Querrichtung. Die Temperatur bei dem Verstrecken betrug 125 °C für alle Versuche. Die Vorheizzeit betrug 300 Sekunden. Verstreckungsgrade und das Ausmaß der Relaxation für die verschiedenen hergestellten erfindungsgemäßen Folien sind der unten stehenden Tabelle 1 zu entnehmen. Die Folien wurden in Längs- und in Querrichtung mit gleicher Geschwindigkeit und mit gleichem Verstreckungsgrad verstreckt. Das Verstrecken dauerte 2 Sekunden. Für einen Teil der hergestellten Folien (siehe Tabelle 1) wurde eine Wärmebehandlung durchgeführt. Diese erfolgte für 5 Sekunden bei 125 °C. Abschließend wurden die Folien relaxiert. Das Ausmaß der Relaxierung ist Tabelle 1 zu entnehmen. Die Geschwindigkeit betrug 12 % Relaxierung pro Sekunde. Es wurden 7 erfindungsgemäße Folien angefertigt.

**Tabelle 1**

| Folie Nr. | 1 | 2 | 3 | 4 | 5 | 6 | 7 |
|---|---|---|---|---|---|---|---|
| Verstreckungsgrad MD x TD | 3x3 | 3x3 | 3, 5x 3, 5* | 3, 5x 3, 5** | 4x4 | 6x6 | 6x6 |
| Wärmebehandlung | Yes | Yes | Yes | Yes | Yes | No | Yes |
| Relaxierung [%] | 15 | 10 | 8 | 8 | - | - | - |
| Zugfestigkeit MD [MPa] | 55 | 68 | 73 | 88 | 81 | 135 | 123 |
| Bruchdehnung [%] | 456 | 310 | 289 | 245 | 251 | 80 | 134 |
| Elastizitätsmodul [MPa] | 1264 | 1212 | 1203 | 1209 | 1171 | 1523 | 1247 |
| Foliendicke [µm] | 210 | 210 | 152 | 150 | 120 | 55 | 55 |

| | | | | | | | |
|---|---|---|---|---|---|---|---|
| * Verstreckungsgeschwindigkeit 50 % bis 100 % pro Sekunde ** Verstreckungsgeschwindigkeit größer als 100 % pro Sekunde | | | | | | | |

Wie man sehen kann, verdoppelt sich der Elastizitätsmodul durch das Verstrecken in etwa.

### Beispiel 2:

### Herstellen von Formkörpern

Aus Folie 1 von Beispiel 1 wurden Formkörper durch Thermoformen hergestellt. Hierzu wurde die Folie auf 125 °C erwärmt und in einer Thermoformanlage wurden daraus Formkörper geformt. Durchgeführt wurde das Thermoformen durch Vakuum-Thermoformen bei einer Temperatur von 125 °C. Die Stempelgeschwindigkeit betrug 200 mm/s, das Stempelmaterial ist aus HYTAC-WFT (Epoxidharz mit Glashohlkugeln und Teflon).

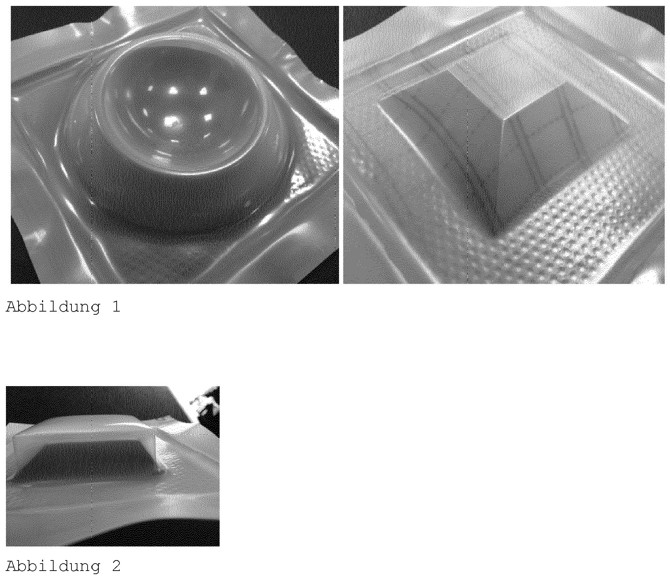

Abbildung 1 zeigt zwei Formkörper, die so hergestellt wurden. Wie man sehen kann sind diese regelmäßig geformt. Die runde Form weist am oberen Scheitelpunkt einen Durchmesser von 150 mm und eine Höhe von 20 mm auf. Die Foliendicke in der Mitte des Formkörpers beträgt 100 µm. Die Foliendicken der rechteckigen Formen liegen im Bereich von 190 bis 210 µm. Die Verstreckung erfolgt daher gleichmäßig und die gebildeten Formköper haben genügende Festigkeit um als Verpackungsmaterialien verwendet werden zu können. Auch an dem Gitter des rechteckigen Formkörpers kann gesehen werden, dass die Verstreckung sehr gleichmäßig und ohne starke Unregelmäßigkeiten erfolgt. Dies führt zu sehr regelmäßigen Wanddicken der Formkörper, was eine Voraussetzung für deren Formbeständigkeit und ihre Barrierewirkung ist. Die Wasserdurchlässigkeit beträgt weniger als 6 g/m²/Tag und die Sauerstoffdurchlässigkeit beträgt weniger als 3500 cm³/m²/Tag.

Abbildung 2 zeigt einen Formkörper, bei dem die Seitenwände senkrecht zu der ursprünglichen Ebene der Folie stehen. Bei einer solchen Form ist die Verformung (die Verstreckung) an der Stelle der Seitenwände sehr hoch. Die Form konnte dennoch erfolgreich hergestellt werden. Die Seitenwände weisen eine Foliendicke von 120µm auf und der Boden (oder Deckel) im Zentrum des Formteils weist eine Foliendicke von 210µm auf. Die Seitenwände sind merklich transparenter als der Boden des Formteils.

### Beispiel 3:

Herstellen einer erfindungsgemäßen Folie.

Material, Lagenaufbau und Lagendicke des Gießfilms entsprechen den Angaben in Beispiel 1. Als Extruder für die mittlere Basisschicht wird ein BT-55-32D Hauptextruder mit Doppelvakuum mit einem 400 µm Filter verwendet. Die Temperatur der extrudierten Schmelze betrug 258 °C. Für die beiden Außenschichten wurde je ein BT-43-30D Co-Extruder mit Einfachvakuum mit einem 200 µm Filter bei einer Temperatur von 263 °C verwendet. Es wurde eine EDI 3-Lagendüse verwendet. Die Kühlwalze hatte eine Temperatur von 80 °C und zum Unterstützen des Anlegens der Folie an die Kühlwalze wird ein Hochdruck-Luftmesser eingesetzt. Ein Wasserbad wurde nicht verwendet.

Der so erzeugte Film wurde in einem simultanen Verfahren biaxial verstreckt. Die Folie durchläuft im Reckofen zunächst 3 Vorheizzonen die Temperaturen im Bereich von 136 bis 144 °C aufweisen. Anschließend durchläuft die Folie 2 Streckzonen, die Temperaturen im Bereich von 116 bis 130 aufweisen. Daran schließen sich 2 Weiterheizzonen an, in denen eine Wärmebehandlung erfolgt. Diese Weiterheizzonen werden bei einer Temperatur von 105 bis 110 °C betrieben. Schließlich durchläuft die Folie eine Kühlzone, die eine Temperatur von 80 °C aufweist.

Die so erhaltene Folie hat eine Dicke von 51,99 µm und einen 2Sigma-Wert der Foliendicke von 8,32 %. Der 2Sigma-Wert ist von Bedeutung für die erfindungsgemäße Folie, weil Folien, die eine große Schwankungsbreite der Dicke aufweisen beim Thermoformen schadhafte Produkte ergeben. Wenn Stellen der Folie, die sehr dünn sind sich beim Thermoformen an Stellen befinden, die stark mechanisch belastet werden, werden die Produkte des Thermoformens undicht und/oder weisen mechanische Schwachstellen auf, die ihre Eigenschaften beeinträchtigen.

Es wurden insgesamt 3 Folien hergestellt. Die folgende Tabelle gibt weitere Daten zu diesem Versuch an.

**Tabelle 2**

| Eigenschaften | | | Einheit | Folie Nr. | | |
|---|---|---|---|---|---|---|
| | | | | 8 | 9 | 10 |
| Verstreckungsgrad MD x TD | | | | 3,2x2,9 | 4,2x3,8 | 5x4,2 |
| Dicke - nominaler Wert | | | µm | 52.0 | 30.0 | 25.0 |
| Dicke | MD Zentrum | | µm | 51,99 | 30,47 | 24,54 |
| | TD | | µm | 54,21 | 31,27 | 25,16 |
| Zugfestigkeit | | MD | MPa | 76 | 116 | 130 |
| | | TD | MPa | 122 | 144 | 149 |
| Bruchdehnung | | MD | % | 330 | 192 | 152 |
| | | TD | % | 242 | 148 | 131 |
| Elastizitätsmodul | | MD | MPa | 1340 | 1221 | 1296 |
| | | TD | MPa | 1399 | 1178 | 1194 |
| Reibungskoeffizient | r/r* | Haft | | 0,20 | 0,19 | 0,14 |
| | r/r | Gleit | | 0,21 | 0,20 | 0,16 |
| | r/ru* | Haft | | 0,26 | 0,22 | 0,18 |
| | r/ru | Gleit | | 0,27 | 0,24 | 0,20 |
| | ru/ru | Haft | | 0,19 | 0,21 | 0,19 |
| | ru/ru | Gleit | | 0,21 | 0,21 | 0,18 |
| Trübung | | | % | 20,60 | 10,70 | 8,09 |
| Glanz | | 45° | | 40 | 65 | 72 |
| Wärmeschrumpf 100/5 | | MD | % | 3,17 | 3,73 | 3,43 |
| | | TD | % | 2,33 | 3,87 | 0,93 |
| Wärmeschrumpf 120/5 | | MD | % | 12,50 | 14,67 | 14,20 |
| | | TD | % | 13,67 | 16,43 | 12,83 |
| Durchstoßfestigkeit (1,0 mm Stift runde Spitze) | Kraft | | N | 9,49 | 9,31 | 7,81 |
| | Kraft | | g | 968,2 | 949,5 | 796,2 |
| | Kraft/Fläche | | N/mm | 175,4 | 280,8 | 311,8 |
| | Arbeit bis zum Bruch | | mJ | 10,35 | 8,31 | 6,44 |
| | Bruchdehnung | | mm | 2,12 | 2,00 | 1,91 |

Anmerkungen: Dicke, Zugfestigkeit, Bruchdehnung, Elastizitätsmodul, Trübung und Wärmeschrumpf wurden direkt nach Herstellung gemessen. Alle anderen Messungen erfolgten einen Tag später. Abkürzungen: r: rauf; ru: runter.

## Patentansprüche

1. Biaxial orientierte Folie für das Thermoformen, wobei die Folie wenigstens 85 Gewichtsprozente Polyethylen und wenigstens 95 Gewichtsprozente Polyolefine, bezogen auf die gesamte Masse der Folie enthält, **dadurch gekennzeichnet, dass** das Polyethylen eine Reißdehnung von wenigstens 7 im Spannungs-Dehnungs-Diagramm aufweist, wobei das Spannungs-Dehnungs-Diagramm bei einer Temperatur von 10°C unter dem Schmelzpunkt des Polyethylens gemessen wird und der Schmelzpunkt mittels dynamischer Differenzkalorimetrie mit einer Erwärmungsrate von 10°C pro Minute bestimmt wird.

2. Folie nach Anspruch 1, **dadurch gekennzeichnet, dass** das Spannungs-Dehnungs-Diagramm des Polyethylens eine obere Streckgrenze aufweist und die Streckspannung die höchste Spannung im Spannungs-Dehnungs-Diagramm ist, wobei das Spannungs-Dehnungs-Diagramm wie unter Anspruch 1 angegeben gemessen wird, insbesondere wobei das Spannungs-Dehnungs-Diagramm des Polyethylens zusätzlich eine untere Streckgrenze aufweist und alle Spannungswerte bei höheren Dehnungswerten als der Dehnung bei der unteren Streckgrenze geringer sind als der Mittelwert aus Streckspannung und der Spannung bei der unteren Streckgrenze, insbesondere wobei das Spannungs-Dehnungs-Diagramm des Polyethylens keine Dehnverfestigung zeigt.

3. Folie nach einem der vorangehenden Ansprüche, **dadurch gekennzeichnet, dass** es sich bei dem Polyethylen um ein Polyethylen ausgesucht aus der Gruppe bestehend aus HDPE, MDPE und LLDPE handelt, und/oder
dass das E-Modul der Folie wenigstens 800 MPa beträgt, und/oder
dass die Folie einen Schrumpf in Längsrichtung von höchstens 5 % aufweist und einen Schrumpf in Querrichtung von höchstens 5 % aufweist.

4. Folie nach einem der vorangehenden Ansprüche, **dadurch gekennzeichnet, dass** die Folie eine Dicke im Bereich von 25 µm bis 2000 µm aufweist, und/oder
dass die Folie einen 2Sigma-Wert der Dickenverteilung von 15 % oder weniger aufweist.

5. Folie nach einem der vorangehenden Ansprüche, **dadurch gekennzeichnet, dass** das Verstreckungsverhältnis in Längs- und in Querrichtung im Bereich von 1,2 bis 5,5 liegt.

6. Verfahren zur Herstellung einer Folie nach einem der Ansprüche 1 bis 4, **dadurch gekennzeichnet, dass** die Folie gemäß einem Verfahren umfassend die folgenden Schritte hergestellt wird:
- Extrusion eines Films umfassend wenigstens eine Schicht umfassend Polyethylen aus wenigstens einer Polymerschmelze,
- Kühlen des Films unter Bildung einer Folie,
- Recken der Folie in Längsrichtung und in Querrichtung, wobei das Verstreckungsverhältnis in Längs- und in Querrichtung im Bereich von 1,2 bis 9 liegt.

7. Verfahren nach Anspruch 6, **dadurch gekennzeichnet, dass** anschließend eine Wärmebehandlung durchgeführt wird, wobei während der Wärmebehandlung eine Relaxierung in Längsrichtung und in Querrichtung vorgenommen wird.

8. Verfahren nach Anspruch 6 oder 7, **dadurch gekennzeichnet, dass** das eingesetzte Polyethylen eine Dichte im Bereich von 0,89 - 0,98 g/cm³ aufweist, und/oder
dass das eingesetzte Polyethylen einen MFI (190 °C/2,16kg) von 0,3-8 g/10min aufweist.

9. Verfahren nach einem der Ansprüche 7 oder 8, **dadurch gekennzeichnet, dass** der Umfang der Relaxierung im Bereich von 2 % bis 12 % liegt.

10. Verwendung einer Folie nach einem der Ansprüche 1 bis 5, für das Thermoformen.

11. Verfahren zur Herstellung eines Formkörpers, **dadurch gekennzeichnet, dass** eine Folie nach einem der Ansprüche 1 bis 5 durch Thermoformen verformt wird.

12. Verfahren nach Anspruch 11, **dadurch gekennzeichnet, dass** ein Verfahren nach einem der Ansprüche 6 bis 9 durchgeführt wird und die so erhaltene Folie durch Thermoformen verformt wird.

13. Verfahren nach einem der Ansprüche 11 oder 12, **dadurch gekennzeichnet, dass** die Folie mit einem Verformungsgrad im Bereich von 2 bis 6 geformt wird.

14. Vollständig oder teilweise durch Thermoformen aus einer biaxial orientierten Folie geformter Formkörper, **dadurch gekennzeichnet, dass** er wenigstens 85 Gew.-% Polyethylen und wenigstens 95 Gew.-% Polyolefine, bezogen auf die gesamte Masse des Formkörpers umfasst, wobei die Folie eine Folie nach einem der Ansprüche 1 bis 5 ist.

15. Formkörper nach Anspruch 14, **dadurch gekennzeichnet, dass** in dem durch Thermoformen geformten Teil des Formkörpers das Verhältnis zwischen der größten Dicke der geformten Folie und der geringsten Dicke der geformten Folie nicht mehr als 2 beträgt, und/oder
dass die Wasserdurchlässigkeit gemessen gemäß ASTM E 96 bei 30 °C und 90 % relativer Luftfeuchtigkeit nicht mehr als 8 g/m²/Tag beträgt, und/oder
dass die Sauerstoffdurchlässigkeit gemessen gemäß ISO 15105-2 bei 23 °C und 0 % relativer Luftfeuchtigkeit nicht mehr als 4000 cm³/m²/Tag beträgt.

## Claims

1. Biaxially-oriented film for thermoforming, wherein the film contains at least 85% by weight polyethylene and at least 95% by weight polyolefins, based on the total mass of the film, **characterised in that** the polyethylene has an elongation at break of at least 7 in the stress-strain diagram, wherein the stress-strain diagram is measured at a temperature of 10°C below the melting point of the polyethylene and the melting point is determined by differential scanning calorimetry using a heating rate of 10°C per minute.

2. Film according to claim 1, **characterised in that** the stress-strain diagram of the polyethylene has an upper yield point and the yield stress is the highest stress in the stress-strain diagram, wherein the stress-strain diagram is measured as specified in claim 1, in particular wherein the stress-strain diagram of the polyethylene additionally has a lower yield point and all stress values in the case of strain values higher than the strain at the lower yield point are lower than the mean value of the yield stress and the stress at the lower yield point, in particular wherein the stress-strain diagram of the polyethylene exhibits no stress-strain hardening.

3. Film according to one of the preceding claims, **characterised in that** the polyethylene is a polyethylene chosen from the group consisting of HDPE, MDPE and LLDPE, and/or
**in that** the modulus of elasticity of the film is at least 800 MPa, and/or
**in that** the shrinkage of the film is at most 5% in the longitudinal direction and at most 5% in the transverse direction.

4. Film according to one of the preceding claims, **characterised in that** the film has a thickness in the range from 25 µm to 2000 µm, and/or
**in that** the film has a 2-sigma thickness distribution value of 15% or less.

5. Film according to one of the preceding claims, **characterised in that** the stretch ratio in the longitudinal and in the transverse direction lies in the range from 1.2 to 5.5.

6. Process for producing a film according to one of claims 1 to 4, **characterised in that** the film is produced according to a process comprising the following steps:
- extruding a film comprising at least one layer comprising polyethylene composed of at least one polymer melt,
- cooling the film to form a film,
- elongating the film in the longitudinal direction and in the transverse direction, wherein the stretch ratio in the longitudinal and in the transverse direction lies in the range from 1.2 to 9.

7. Process according to claim 6, **characterised in that** a heat treatment is subsequently carried out, wherein during the heat treatment relaxation is performed in the longitudinal direction and in the transverse direction.

8. Process according to claim 6 or 7, **characterised in that** the polyethylene used has a density in the range from 0.89 - 0.98 g/cm³, and/or
**in that** the polyethylene used has an MFI (190°C/2.16 kg) of 0.3-8 g/10 min.

9. Process according to one of claims 7 or 8, **characterised in that** the extent of the relaxation is in the range from 2% to 12%.

10. Use of a film according to one of claims 1 to 5 for thermoforming.

11. Process for producing a shaped body, **characterised in that** a film according to one of claims 1 to 5 is deformed by thermoforming.

12. Process according to claim 11, **characterised in that** a process according to one of claims 6 to 9 is carried out and the film thus obtained is deformed by thermoforming.

13. Process according to either claim 11 or 12, **characterised in that** the film is formed with a degree of deformation in the range from 2 to 6.

14. Shaped body formed fully or partly by thermoforming from a biaxially-oriented film, **characterised in that** it comprises at least 85 wt.% polyethylene and at least 95 wt.% polyolefins, based on the total mass of the shaped body, wherein the film is a film according to any of the claims 1 to 5.

15. Shaped body according to claim 14 **characterised in that** in the part of the shaped body that was formed by thermoforming, the ratio of the greatest thickness of the formed film to the smallest thickness of the formed film is not more than two, and/or
**in that** the water permeability measured to ASTM E 96 at 30°C and 90% relative humidity is not more than 8 g/m²/day, and/or
**in that** the oxygen permeability measured to ISO 15105-2 at 23°C and 0% relative humidity is not more than 4000 cm³/m²/day.

## Revendications

1. Feuille à orientation biaxiale pour thermoformage, la feuille contenant au moins 85 pour cent en poids de polyéthylène et au moins 95 pour cent en poids de polyoléfines, par rapport à la masse totale de la feuille ; **caractérisée en ce que** le polyéthylène présente un allongement à la rupture d'au moins 7 dans le diagramme contrainte-déformation, ledit diagramme contrainte-déformation étant mesuré à une température de 10 °C en dessous du point de fusion du polyéthylène, et le point de fusion étant déterminé par calorimétrie différentielle dynamique avec une vitesse de chauffage de 10 °C par minute.

2. Feuille selon la revendication 1, **caractérisée en ce que** le diagramme contrainte-déformation du polyéthylène présente une limite d'élasticité supérieure et la contrainte au seuil d'écoulement est la contrainte la plus élevée du diagramme contrainte-déformation, ledit diagramme contrainte-déformation étant mesuré de la manière indiquée dans la revendication 1, ledit diagramme contrainte-déformation du polyéthylène présentant notamment en outre une limite d'élasticité inférieure et toutes les valeurs de contrainte à des valeurs de déformation plus élevées que la déformation à la limite d'élasticité inférieure sont inférieures à la valeur moyenne de la contrainte au seuil d'écoulement et de la contrainte à la limite d'élasticité inférieure, le diagramme contrainte-déformation du polyéthylène ne montrant notamment aucun écrouissage.

3. Feuille selon l'une des revendications précédentes, **caractérisée en ce que** le polyéthylène est un polyéthylène choisi dans le groupe constitué du HDPE, du MDPE et du LLDPE, et/ou
**en ce que** le module d'élasticité de la feuille est d'au moins 800 MPa, et/ou
**en ce que** la feuille présente un retrait dans le sens longitudinal d'au plus 5 % et un retrait dans le sens transversal d'au plus 5 %.

4. Feuille selon l'une des revendications précédentes, **caractérisée en ce que** la feuille a une épaisseur allant de 25 µm à 2000 µm, et/ou
**en ce que** la feuille a une valeur 2 sigma de distribution d'épaisseur de 15 % ou moins.

5. Feuille selon l'une des revendications précédentes, **caractérisée en ce que** le rapport d'étirement dans les sens longitudinal et transversal allant de 1,2 à 5,5.

6. Procédé de production d'une feuille selon l'une des revendications 1 à 4, **caractérisé en ce que** la feuille est produite selon un procédé comprenant les étapes suivantes :
- extrusion d'un film comprenant au moins une couche comprenant du polyéthylène, à partir d'au moins un polymère fondu,
- refroidissement du film pour former une feuille,
- étirage de la feuille dans le sens longitudinal et dans le sens transversal, le rapport d'étirement dans les sens longitudinal et transversal allant de 1,2 à 9.

7. Procédé selon la revendication 6, **caractérisé en ce qu'**on effectue ensuite un traitement thermique, une relaxation étant réalisée dans le sens longitudinal et dans le sens transversal lors du traitement thermique.

8. Procédé selon la revendication 6 ou 7, **caractérisé en ce que** le polyéthylène mis en œuvre a une densité allant de 0,89 à 0,98 g/cm³, et/ou
**en ce que** le polyéthylène mis en œuvre a un MFI (190 °C/2, 16 kg) de 0,3 à 8 g/10 min.

9. Procédé selon l'une des revendications 7 et 8, **caractérisé en ce que** le taux de relaxation va de 2 % à 12 %.

10. Utilisation d'une feuille selon l'une des revendications 1 à 5 pour un thermoformage.

11. Procédé de production d'un corps façonné, **caractérisé en ce qu'**une feuille selon l'une des revendications 1 à 5 est déformée par thermoformage.

12. Procédé selon la revendication 11, **caractérisé en ce qu'**on réalise un procédé selon l'une des revendications 6 à 9 et on déforme la feuille ainsi obtenue par thermoformage.

13. Procédé selon l'une des revendications 11 et 12, **caractérisé en ce que** la feuille est façonnée avec un degré de déformation allant de 2 à 6.

14. Corps moulé façonné entièrement ou partiellement par thermoformage à partir d'une feuille à orientation biaxiale, **caractérisé en ce qu'**il comprend au moins 85 % en poids de polyéthylène et au moins 95 % en poids de polyoléfines, par rapport à la masse totale du corps moulé, ladite feuille consistant notamment en une feuille selon l'une des revendications 1 à 5.

15. Corps moulé selon la revendication 14, **caractérisé en ce que**, dans la partie du corps moulé façonnée par thermoformage, le rapport entre la plus grande épaisseur de la feuille façonnée et la plus petite épaisseur de la feuille façonnée n'est pas supérieur à 2, et/ou
**en ce que** la perméabilité à l'eau mesurée selon la norme ASTM E 96 à 30 °C et 90 % d'humidité relative n'est pas supérieure à 8 g/m²/jour, et/ou
**en ce que** la perméabilité à l'oxygène mesurée selon la norme ISO 15105-2 à 23 °C et 0 % d'humidité relative n'est pas supérieure à 4000 cm³/m²/jour.
